# EUROPÄISCHE PATENTSCHRIFT

(11) **EP 4 129 114 B1**
(45) Veröffentlichungstag und Bekanntmachung des Hinweises auf die Patenterteilung: **03.09.2025**
(21) Anmeldenummer: 22186171.9
(22) Anmeldetag: 21.07.2022
(51) Int. Cl.: A45C 5/03, F21V 33/00, G06F 1/16, A45C 15/06, A47B 23/04

(54) **MOBILE ARBEITSSTATION**
MOBILE WORK STATION
POSTE MOBILE DE TRAVAIL

(30) Priorität: 05.08.2021 DE 202021104177 U
(43) Veröffentlichungstag der Anmeldung: 08.02.2023
(73) Patentinhaber: Zumtobel Lighting GmbH, 6850 Dornbirn (AT)
(72) Erfinder: Jungen, Christian, 6850 Dornbirn (AT); Junghans, Bert, 6850 Dornbirn (AT); Kocks, Markus, 6850 Dornbirn (AT); Lonsdale, Julian, 6850 Dornbirn (AT); Menke, Matthias, 6850 Dornbirn (AT); Skergeth, Sascha, 6850 Dornbirn (AT)
(74) Vertreter: Thun, Clemens

(56) Entgegenhaltungen:
- WO-A1-2022/112878
- CN-A- 113 038 202
- GB-A- 2 558 679
- US-A1- 2002 063 072
- DARTMUTHIA: "New Pelican case, with custom lighting upgrade!", 17 December 2021 (2021-12-17), pages 1 - 1, XP093130685, Retrieved from the Internet <URL:https://www.reddit.com/r/livesound/comments/ri8wfr/new_pelican_case_with_custom_lighting_upgrade/> [retrieved on 20240213]

## Beschreibung

Die Erfindung betrifft eine mobile Arbeitsstation mit einem aufklappbaren Gehäuse, einer Arbeitsplatte und zumindest einem Lichtabgabemittel für die Fernarbeit, insbesondere für das Homeoffice.

Die Anforderungen an eine professionelle Beleuchtung von Arbeitsplätzen sind durch eine Vielzahl von Regelungen und Normen festgelegt. Hierbei ist beschrieben, mit welcher Helligkeit Arbeitsplätze auszuleuchten sind, um ein effizientes Arbeiten, beispielsweise ein Lesen oder Bearbeiten von Dokumenten zu ermöglichen. Ferner soll die Lichtabgabe in einer bestimmten Art und Weise erfolgen, um störende Reflexionen bspw. auf Bildschirmoberflächen zu vermeiden. Alle diese Maßnahmen tragen dazu bei, ein Arbeitsumfeld zu schaffen, in dem zumindest hinsichtlich der Lichtbedingungen optimale Voraussetzungen für eine effiziente Arbeit vorliegen.

Die oben beschriebenen Normen und Maßnahmen beziehen sich in erster Linie auf die Bürobeleuchtung. Allerdings findet zwischenzeitlich vermehrt Arbeit im Homeoffice, also im privaten Bereich statt, in dem eine entsprechende Umsetzung der Beleuchtungsnormen nicht möglich ist. Ein Großteil der Homeoffice-Arbeit findet an privaten PCs, insbesondere an Laptops statt, die an einem zu Hause zur Verfügung stehenden Tisch platziert werden, der üblicherweise anderen Zwecken, insbesondere nicht der Büroarbeit dient. Die an dieser Stelle vorliegende Beleuchtung kann dann äußerst variabel von der aktuellen Situation abhängig sein und wird in der Regel eher nicht die Anforderungen an eine zufriedenstellende Arbeitsplatzbeleuchtung erfüllen.

Eine unzureichende Beleuchtung wirkt sich allerdings im Homeoffice-Bereich nicht nur negativ auf die Lesbarkeit von Dokumenten und/oder Bildschirmen aus, sondern beeinträchtigt darüber hinaus auch das Wohlempfinden der arbeitenden Person. Ferner ist zu berücksichtigen, dass aufgrund der verstärkten Homeoffice-Arbeit mehr und mehr Videokonferenzen stattfinden, für welche dann die Kamera eines Laptops oder die an einem Laptop bzw. PC angebrachte Kamera genutzt wird. Auch in dieser Situation ist es eher unwahrscheinlich, dass die an der Videokonferenz teilnehmende Person derart ausgeleuchtet ist, dass mit Hilfe der Kamera zufriedenstellende Aufnahmen erzielt werden. Oftmals erscheinen Personen dann unterbelichtet bzw. stark unterschiedlich belichtet oder in einem als unangenehm bzw. ungesund empfundenen Farbton, was beispielsweise auf die Nutzung von Lichtquellen mit einer insbesondere zu kalten Farbtemperatur zurückzuführen ist.

Gängige Homeoffice- bzw. Fernarbeitsplätze sind somit nicht ausreichend gut ausgeleuchtet, um ein effizientes und angenehmes Arbeiten in den verschiedensten Arbeitssituationen zu ermöglichen.

Weiterhin wird der durch die Fernarbeit genutzte Platz oftmals auch anderweitig, beispielsweise als Esstisch verwendet, sodass bislang die für das Homeoffice aufgebauten Geräte und Dokumente vor und nach der Arbeitszeit jeweils ab- bzw. aufgebaut, und außerhalb der Arbeitszeit an einem anderen Ort verstaut werden müssen. Insofern ist auch der Aufbau, der Transport und die Lagerung der Komponenten für einen Homeofficeplatz mit einem erheblichen Aufwand verbunden.

Die CN 113 038 202 A beschäftigt sich mit dem technischen Gebiet der Plattform-Live-Broadcast-Ausrüstung, und bezieht sich hierbei auf eine multifunktionale mobile Plattform-Live- Broadcast-Ausrüstung. Die Live- Broadcast-Ausrüstung umfasst hierbei einen Gerätemontagekörper und eine Kameraaufnahmeabdeckung, wobei der Gerätemontagekörper und die Kameraaufnahmeabdeckung drehbar durch ein Scharnier verbunden sind. Weiterhin ist eine ringförmige Lampe und eine darin zentriert angeordnete Kamera auf der Innenseite der Kameraaufnahmeabdeckung angeordnet. Eine weitere mobile Arbeitstation ist aus dem Patentdokument US2002063072A1 bekannt.

Der vorliegenden Erfindung liegt die Aufgabenstellung zugrunde, für die oben geschilderte Situation der Homeoffice-Arbeit eine Lösung anzubieten, mit deren Hilfe in einfacher Weise eine möglichst gut beleuchtete und flexible Arbeitssituation geschaffen wird, die das Arbeiten erleichtert, das Wohlbefinden der arbeitenden Person fördert und das Setup des Arbeitsplatzes vereinfacht.

Die Aufgabe wird durch eine mobile Arbeitsstation, welche die Merkmale des unabhängigen Anspruchs 1 aufweist, gelöst. Vorteilhafte Weiterbildungen der Erfindung sind Gegenstand der abhängigen Ansprüche.

Kerngedanke der vorliegenden Erfindung ist es, eine mobile Arbeitsstation zur Verfügung zu stellen, die in einfacher und flexibler Weise genutzt werden kann, um an dem für die Fernarbeit bzw. Homeoffice-Arbeit genutzten Platz optimierte Beleuchtungsbedingungen zu schaffen und so die Arbeit des Benutzers zu unterstützen. Die mobile Arbeitsstation soll weiterhin möglichst flexibel einsetzbar sowie leicht transportierbar und aufbewahrbar sein. Hierbei wird davon ausgegangen, dass die Homeoffice-Arbeit überwiegend auf einer Fläche stattfindet, welche dazu ausgebildet ist einen Laptop oder ein sonstiges Mobilgerät darauf zu positionieren, oder auch als Schreibunterlage oder Ähnliches dienen kann. Die mobile Arbeitsstation ist somit mit einer Arbeitsplatte ausgestattet, welche zu diesen Zwecken verwendet werden kann, wobei die mobile Arbeitsstation weiterhin zumindest ein Lichtabgabemittel aufweist, wobei das erfindungsgemäße Lichtabgabemittel dann zunächst dazu ausgestaltet ist, ein die Arbeit des Benutzers unterstützendes Licht abzugeben, also einen Bereich in der Umgebung der Arbeitsplatte bzw. der mobilen Arbeitsstation oder die die mobile Arbeitsstation nutzende Person möglichst blendfrei zu beleuchten. Hierzu ist das zumindest eine Lichtabgabemittel mit einem der beiden Gehäuseteile des Gehäuses der mobilen Arbeitsstation gekoppelt.

Erfindungsgemäß wird also eine mobile Arbeitsstation vorgeschlagen, welche durch ein aufklappbares Gehäuse gebildet ist, wobei das Gehäuse einen ersten Gehäuseteil und einen zweiten Gehäuseteil aufweist, und wobei im zugeklappten Zustand des Gehäuses der erste und der zweite Gehäuseteil einander gegenüberliegend angeordnet sind. Weiterhin weist die mobile Arbeitsstation eine Arbeitsplatte zur Positionierung eines Mobilgeräts auf, wobei die Arbeitsplatte innerhalb des Gehäuses angeordnet und mit dem Gehäuse gekoppelt ist. Zudem weist die mobile Arbeitsstation zumindest ein Lichtabgabemittel zur Abgabe eines eine Arbeit eines Benutzers unterstützenden Lichts auf, wobei das zumindest eine Lichtabgabemittel mit dem ersten und/oder zweiten Gehäuseteil gekoppelt ist.

Die so gestaltete mobile Arbeitsstation ist mit ihrem zu- und aufklappbaren Gehäuse äußerst flexibel transportierbar und aufstellbar. Insofern wird es einem Benutzer ermöglicht ortsunabhängig einen geeigneten Arbeitsplatz aufzusetzen, wobei mittels des zumindest einen Lichtabgabemittels stets eine der Arbeitssituation entsprechend geeignete Beleuchtung ermöglicht ist. Die Arbeitsplatte der mobilen Arbeitsstation bietet hierbei eine flexibel einsetzbare Arbeitsunterlage, welche sowohl als Schreibunterlage oder als Unterlage zur Positionierung von Mobilgeräten, wie beispielsweise einem Laptop oder einem Tablet, dient. Zudem ist die Arbeitsplatte im zugeklappten Zustand des Gehäuses der mobilen Arbeitsstation, welche gleichzeitig einen Transportzustand bzw. Aufbewahrungszustand der mobilen Arbeitsstation darstellt, im Inneren des Gehäuses angeordnet, und somit besonders geschützt ist. Das Gehäuse der mobilen Arbeitsstation mit seinen beiden Gehäusehälften dient weiterhin zur Anordnung des zumindest einen Lichtabgabemittels, wobei dieses sowohl auf der Außenseite und/oder der Innenseite des Gehäuses angeordnet sein kann.

Die erfindungsgemäße mobile Arbeitsstation kann insbesondere in zwei besonders bevorzugten Ausführungsformen realisiert werden.

In einer nicht erfindungsgemäßen ersten Ausführungsform ist das zumindest eine Lichtabgabemittel fest mit dem Gehäuse der mobilen Arbeitsstation verbunden, und ist bevorzugt auf einer Innenseite und/oder Außenseite des ersten oder zweiten Gehäuseteils angeordnet. Die so geschaffene mobile Arbeitsstation mit zumindest einem festen Lichtabgabemittel zeichnet sich durch eine besonders einfache Aufstellbarkeit aus, da das Lichtabgabemittel fest mit dem Gehäuse verbunden ist und somit nicht zusätzlich erst mit dem Gehäuse verbunden werden muss.

Vorzugsweise ist die nicht erfindungsgemäße erste Ausführungsform weiterhin bevorzugt so ausgebildet, dass die Richtung der Lichtabgabe des zumindest einen Lichtabgabemittels verstellbar ist, und bevorzugt relativ zum ersten Gehäuseteil verstellbar ist, und/oder dass die Lichtabgabe des zumindest einen Lichtabgabemittels einstellbar ist, wobei insbesondere die Helligkeit und/oder die Farbtemperatur veränderbar ist. Somit kann das durch das zumindest eine Lichtabgabemittel abgegebene Licht individuell an die Arbeitssituation angepasst werden, sodass sich beispielsweise eine direkte Beleuchtung der Arbeitsplatte oder eine Hinterleuchtung eines auf der Arbeitsplatte positionierten Mobilgeräts oder eine Beleuchtung des Gesichts des Benutzers realisieren lässt. Mit der weiteren bevorzugten Ausführung der veränderbaren Lichtabgabe hinsichtlich der Helligkeit und/oder die Farbtemperatur lässt sich das abgegebene Licht weiter flexibel und situationsbedingt beeinflussen.

Eine zweite Ausführungsform der mobilen Arbeitsstation sieht vor, dass das zumindest eine Lichtabgabemittel nicht fest mit dem Gehäuse verbunden ist, sondern flexibel darauf anordbar und reversibel damit verbindbar ist. In dieser erfindungsgemäßen Ausführungsform ist also vorgesehen, dass das zumindest eine Lichtabgabemittel ein mobiles Leuchtelement ist, wobei das zumindest eine mobile Leuchtelement auf einer Innenfläche des ersten Gehäuseteils der mobilen Arbeitsstation reversibel befestigt ist. Weiterhin ist in dieser Ausführungsform vorgesehen, dass je nach Positionierung des zumindest einen mobilen Leuchtelements verschiedene Lichtabgabearten - wie beispielsweise ein direkte Beleuchtung des Benutzers oder der Arbeitsplatte, oder eine indirekte Beleuchtung des Benutzers oder der Arbeitsplatte, oder eine Hinterleuchtung des Mobilgeräts - durch die mobile Arbeitsstation realisiert sind. Die so geschaffene mobile Arbeitsstation ist besonders flexibel einsetzbar und auf verschiedene bereits vorhandene Umgebungsbeleuchtungen anpassbar, derart, dass insbesondere die Ausleuchtung der Arbeitsplatte bzw. des Mobilgeräts oder des Benutzers bestmöglich realisiert werden kann, wobei mit mehreren verschiedenen mobilen Leuchtelementen mehrere Beleuchtungen gleichzeitig realisierbar sind.

Erfindungsgemäß ist vorgesehen, dass das mobile Leuchtelement ein Leuchtengehäuse mit einer Lichtabgabefläche aufweist, und zur Lichtabgabe über die Lichtabgabefläche ausgebildet ist, wobei das mobile Leuchtelement in unterschiedlichen Positionen und/oder Orientierungen auf einer Innenfläche des ersten Gehäuseteils der mobilen Arbeitsstation reversibel befestigbar ist. Durch das Leuchtengehäuse sind die darin liegenden Komponenten des mobilen Leuchtelements besonders gut geschützt und es lässt sich besonders leicht transportieren und verwenden ohne einen Benutzer oder die elektronischen Bauteile des Leuchtelements zu gefährden.

Weiterhin kann das mobile Leuchtelement LED-Leuchtmittel, und bevorzugt Mittel zur Energiespeicherung, insbesondere einen wiederaufladbaren Akkumulator, aufweisen. Das so geschaffene mobile Leuchtelement zeichnet sich durch eine besonders flexible Einsetzbarkeit aus.

Weiterhin kann bevorzugt vorgesehen sein, dass das mobile Leuchtelement zur lösbaren Befestigung an der mobilen Arbeitsstation Befestigungsmittel aufweist. Mittels dieser Befestigungsmittel lässt sich das Leuchtelemente besonders einfach und flexibel mit dem Gehäuse der mobilen Arbeitsstation koppeln. Bevorzugt sind die Befestigungsmittel zur flexiblen Befestigung durch Magnete gebildet. In dieser Ausführung der Befestigungsmittel kann das Leuchtelement besonders einfach mit einem Metallgehäuse, bzw. einem ferromagnetischen Gehäuse der mobilen Arbeitsstation interagieren. Allerdings könnte auch vorgesehen sein, dass die Befestigungsmittel jeweils zweiteilig ausgeführt sind, sodass eine Befestigung des Leuchtelements auch an einem nicht-ferromagnetischen Gehäuse, beispielsweise einem Kunststoffgehäuse, der mobilen Arbeitsstation möglich ist. Dies könnte beispielsweise durch ein Befestigungsmittel realisiert sein, welches auf einer der zur Positionierung eines jeweiligen Leuchtelements gegenüberliegenden Oberfläche eines Elements des Gehäuses der mobilen Arbeitsstation angeordnet ist, und so durch das Element hindurch das mobile Leuchtelement magnetisch anzieht, sodass das mobile Leuchtelement an der Oberfläche des Gehäuses gehalten ist. Hierbei kann insbesondere vorgesehen sein, dass zumindest ein Teil der Befestigungsmittel im Inneren des Leuchtengehäuses angeordnet ist, oder integral mit dem Leuchtengehäuse ausgebildet ist. Eine derartige Gestaltung lässt das mobile Leuchtelement besonders ästhetisch erscheinen.

Vorzugsweise ist vorgesehen, dass die Lichtabgabe des mobilen Leuchtelements einstellbar ist, wobei insbesondere die Helligkeit und/oder die Farbtemperatur veränderbar ist. Ein derartiges mobiles Leuchtelement ist besonders einfach an eine jeweilige gegenwärtige Situation anpassbar, sodass das Leuchtelement besonders flexibel einsetzbar ist. Ein Benutzer kann so das mobile Leuchtelement an seine Bedürfnisse anpassen und so die Lichtabgabe einstellen, dass die Lichtabgabe beispielsweise für eine Direktbeleuchtung des Gesichts des Benutzers oder eine Hinterleuchtung des Mobilgeräts oder eine Beleuchtung der Arbeitsplatte oder ähnliche Beleuchtungsszenarien geeignet ist. Auch kann beispielsweise der Arbeitsraum in welchem die mobile Arbeitsstation aufgestellt ist, durch derartige einstellbare Leuchtelemente beleuchtet werden. Insbesondere mit der Veränderbarkeit der Farbtemperatur ist das Leuchtelement besonders flexibel verwendbar, da beispielsweise mittels eines wärmeres Lichts die Haut des Benutzers gesünder aussieht, wohingegen beispielsweise Dokumente oder andere Gegenstände auf der Arbeitsplatte mit einem kühleren Licht besser lesbar sind.

Vorzugsweise weist das mobile Leuchtelement Bedientasten zur Anpassung der Lichtabgabe und/oder zum An- und Ausschalten des mobilen Leuchtelements auf. Somit ist eine einfache und intuitive Möglichkeit zur Bedienung und Anpassung des Leuchtelements gegeben. Hierbei kann weiterhin bevorzugt vorgesehen sein, dass sofern mehrere Leuchtelemente in der mobilen Arbeitsstation vorgesehen sind, die Lichtabgabe der mehreren Leuchtelemente durch Betätigung der Bedientasten eines der mehreren Leuchtelemente gebündelt verstellt werden können, da die Leuchtelemente in dieser Ausführung über Kommunikationsmittel verfügen.

Auch kann bevorzugt vorgesehen sein, dass das mobile Leuchtelement zumindest eine Sensoreinheit zur automatischen Anpassung der Lichtabgabe aufweist, wobei die Sensoreinheit bei der Anpassung der Lichtabgabe insbesondere Daten hinsichtlich Umgebungshelligkeit, Zeit, Position und/oder Ausrichtung des mobilen Leuchtelements berücksichtigt. So kann beispielsweise das mobile Leuchtelement selbst abhängig von der Uhrzeit die Farbtemperatur und/oder die Helligkeit anpassen, sodass beispielsweise eine besonders augenschonende Lichtabgabe erzielt wird. Weiterhin könnte das mobile Leuchtelement so auch automatisch anhand der Ausrichtung erkennen, welche Lichtabgabeeinstellungen verwendet werden sollen. So ist ein besonders einfach und flexibel einsetzbares Leuchtelement geschaffen.

Vorzugsweise kann weiterhin sowohl in der ersten wie auch in der zweiten Ausführung der mobilen Arbeitsstation vorgesehen sein, dass das erste und das zweite Gehäuseteil über ein Verbindungselement miteinander gekoppelt sind, derart, dass im aufgeklappten Zustand das erste Gehäuseteil und das zweite Gehäuseteil zumindest in einer ersten Näherung in einem Winkel von 90° zueinander angeordnet sind. Dieses Verbindungselement kann beispielsweise durch ein Scharnier gebildet sein. Insbesondere kann vorgesehen sein, dass im aufgeklappten Zustand das erste und das zweite Gehäuseteil in einem Winkel zwischen 85° und 95° zueinanderstehen. Weiterhin kann vorgesehen sein, dass ein Halteelement den aufgeklappten Zustand der mobilen Arbeitsstation fixiert, derart, dass ein ungewolltes Zuklappen der beiden Gehäuseteile verhindert wird, sodass es einer bestimmten Kraft bedarf, um das Gehäuse zu schließen.

Hinsichtlich der beiden Gehäuseteile kann vorzugsweise vorgesehen sein, dass das erste Gehäuseteil ein sich räumlich erstreckendes Deckelelement des Gehäuses, ein Stirnelement und zwei erste Seitenelemente aufweist, wobei das Stirnelement sowie die zwei ersten Seitenelemente mit dem Grundelement verbunden sind und jeweils senkrecht zum Grundelement angeordnet sind, wobei die zwei ersten Seitenelemente parallel zueinander an zwei gegenüberliegenden Seiten des Grundelements angeordnet sind, und das Stirnelement die zwei ersten Seitenelemente verbindend angeordnet ist. Zudem oder alternativ hierzu kann vorgesehen sein, dass das zweite Gehäuseteil ein sich räumlich erstreckendes Bodenelement des Gehäuses, ein rückseitiges Stirnelement und zwei zweite Seitenelemente aufweist, wobei die zwei zweiten Seitenelemente parallel zueinander an zwei gegenüberliegenden Seiten des Bodenelements angeordnet sind, und das rückseitige Stirnelement die zwei ersten Seitenelemente verbindend angeordnet ist, wobei im zugeklappten Zustand des Gehäuses das Stirnelement und das rückseitige Stirnelement zwei gegenüberliegenden Seiten des Gehäuses bilden. Somit ähnelt das Gehäuse der mobilen Arbeitsstation näherungsweise einem Pizzakarton, wobei die ersten und zweiten Seitenelemente zusammen mit dem Stirnelement und dem rückseitigen Stirnelement die Schmalseiten des Gehäuses bilden. Während die beiden Stirnelemente die jeweilige Seite alleine abdecken, liegen die ersten und zweiten Seitenelemente auf beiden Seiten jeweils aufeinander.

Vorzugsweise ist hierbei vorgesehen, dass die Arbeitsplatte mit dem zweiten Gehäuseteil, bevorzugt mittels eines Koppelelements, gekoppelt ist. Hierdurch lässt sich der Zustandsübergang des Gehäuses der mobilen Arbeitsstation vom zugeklappten in den aufgeklappten Zustand besonders einfach realisieren. Weiterhin bevorzugt ist die Arbeitsplatte hierbei angewinkelt zum Bodenelement angeordnet, wobei mittels dieser Ausgestaltung der Arbeitsbereich auf der Arbeitsplatte für einen Benutzer besonders ergonomisch bedienbar ist, und das Arbeiten mit der mobilen Arbeitsstation erleichtert. Zudem kann vorgesehen sein, dass die Arbeitsplatte im aufgeklappten Zustand des Gehäuses bevorzugt relativ zum zweiten Gehäuseteil ausfahrbar angeordnet ist. Hierbei kann beispielsweise ein Schienensystem vorgesehen sein, welches Teil des Koppelelements ist, sodass der Benutzer die Position der Arbeitsplatte verstellen kann und so insbesondere den Abstand der Arbeitsplatte und somit vom darauf angeordneten Mobilgerät zum Deckelelement anpassen kann. Weiterhin bevorzugt ist die Arbeitsplatte relativ zum zweiten Gehäuseteil hochklappbar angeordnet, wobei zudem bevorzugt zwischen der Arbeitsplatte und dem Bodenelement ein Stauraum gebildet ist. Hierbei ist durch die angewinkelte Anordnung und der Hochklappbar- bzw. Ausfahrbarkeit der Arbeitsplatte ein Stauraum für Arbeitsutensilien wie beispielsweise Dokumente, USB-Sticks, Schreibgeräte, Bücher und ähnlichem gegeben, sodass mit der mobilen Arbeitsstation die benötigten Arbeitsunterlagen an einem Ort verstaut und transportiert werden können, wobei zudem diese auch während der Benutzung der mobilen Arbeitsstation in einfacher Weise zugänglich sind. Insofern bietet die so geschaffene mobile Arbeitsstation eine besonders einfache und vielseitige Benutzung.

Ferner kann vorgesehen sein, dass das Gehäuse mittels einer Verschlussanordnung reversibel verschließbar ist. Hierdurch lässt sich ein unabsichtliches Aufklappen des Gehäuses verhindern, wobei zudem die im Inneren des Gehäuses angeordneten Komponenten und Unterlagen von äußeren Einflüssen und beispielsweise auch vor Diebstahl geschützt sind.

Vorteilhafterweise ist die Arbeitsplatte mit dem Bodenelement mittels einer weiteren Verschlussanordnung reversibel verbindbar. Somit wird verhindert, dass die Arbeitsplatte versehentlich hochgeklappt wird, und weiterhin wird sichergestellt, dass Gegenstände, welche zwischen der Arbeitsplatte und dem Bodenelemente des Gehäuses angeordnet sind, nicht herausfallen, sondern stets gesichert sind. Hierbei kann insbesondere vorgesehen sein, dass Komponenten der Verschlussanordnung auch Komponenten der weiteren Verschlussanordnung sind.

Vorzugsweise weist die Arbeitsplatte Sicherungselemente auf, welche dazu ausgebildet sind ein auf der Arbeitsplatte angeordnete Mobilgerät, zu fixieren. Hierdurch kann insbesondere im zugeklappten Zustand des Gehäuses sichergestellt werden, dass das auf der Arbeitsplatte angeordnete und mittels der Sicherungselemente fixierte Mobilgerät innerhalb der mobilen Arbeitsstation gesichert ist und Transport und Lagerung schadenfrei übersteht. Bevorzugt ist jeweils zumindest ein Teil eines Sicherungselements integral mit der Arbeitsplatte ausgebildet.

Weiterhin vorzugsweise ist vorgesehen, dass die Arbeitsplatte an der dem rückseitigen Stirnelement des Gehäuses zugewandten Seite ein Begrenzungselement aufweist, welches aus der Ebene der Arbeitsplatte angewinkelt hervorsteht, wobei bevorzugt das Begrenzungselement zumindest ein Kabelführungselement aufweist. Mit diesem Begrenzungselement wird ein auf der Arbeitsplatte angeordnetes Mobilgerät zusätzlich gesichert, wobei insbesondere im Betriebszustand der mobilen Arbeitsstation, bzw. im aufgeklappten Zustand des Gehäuses, ein bestimmter Mindestabstand zwischen Mobilgerät und dem Deckelelement des Gehäuses erzielt wird. Mittels der Kabelführungselemente wird ermöglicht eine besonders einfache und optisch ästhetische Kabelführung ermöglicht und eine möglichst einfache Kopplung des Mobilgeräts mit Strom- und/oder Datenkabeln sichergestellt.

Hierbei kann vorzugsweise vorgesehen sein, dass die mobile Arbeitsstation eine Kabelleitung zur Bereitstellung von Strom- und Datensignalen aufweist, welche bevorzugt mit einer im Inneren des Gehäuses angeordneten Anschlussleiste gekoppelt ist, wobei bevorzugt die Anschlussleiste zumindest einen Stromanschluss, insbesondere einen Wechselstromanschluss und/oder einen Gleichstromanschluss, und/oder zumindest einen Datenanschluss aufweist. Eine derartig beschaffene mobile Arbeitsstation beinhaltet somit für einen Benutzer sämtliche Anschlüsse für ein produktives Arbeiten an einem Fern bzw. Heimarbeitsplatz. Insbesondere kann vorgesehen sein, dass die Anschlussleiste ferner mit Lademöglichkeiten für die Leuchtelemente ausgestattet ist. Zudem sind unterschiedliche Wechselstrom- bzw. Gleichstromanschlüsse denkbar, welche sich in ihrer Spannung und/oder Stromstärke unterscheiden, sodass die mobile Arbeitsstation besonders vielseitig anwendbar ist. Weiterhin kann vorgesehen sein, dass die Anschlussleiste bzw. die Kabelleitung über ein Adapterelement verfügt, derart, dass die mobile Arbeitsstation länderübergreifend an das jeweilige dort gegenwärtige Stromnetz anschließbar ist. Das Adapterelement kann hierbei beispielsweise durch ein Steckerelement und/oder durch ein Transformatorelement gebildet sein.

Ferner kann vorgesehen sein, dass das Gehäuse ein Griffelement aufweist, welches insbesondere als Grifföffnung, Koffergriff oder Riemen gebildet ist. Mittels eines solchen Griffelements ist die Portabilität und Verstaubarkeit der mobilen Arbeitsstation weiter verbessert. Bevorzugt ist das Griffelement an der Außenseite des Stirnelements des Gehäuses angeordnet.

Weiterhin ist erfindungsgemäß ein System zur Mobilarbeit vorgesehen, welches eine Ausführungsform der mobilen Arbeitsstation sowie ein Mobilgerät aufweist.

Insgesamt wird also eine mobile Arbeitsstation zur Verfügung gestellt, mit deren Hilfe in der Fern- bzw. Heimarbeit ein Arbeitsplatz mit Arbeitsplatzbeleuchtung in einfacher und effizienter Weise deutlich optimiert wird. Mit der mobilen Arbeitsstation kann so jeder Ort für ein produktives und professionelles Arbeiten verwendet werden, da die mobile Arbeitsstation für die hierfür notwendigen Rahmenbedingungen und im Besonderen für eine entsprechende Beleuchtung sorgt.

Die Erfindung wird im Folgenden anhand von Ausführungsbeispielen und mit Bezug auf die Zeichnungen näher erläutert. Es zeigen:
- Fig. 1: eine perspektivische Darstellung mit Schrägsicht auf eine Oberseite einer Ausführungsform einer erfindungsgemäßen mobilen Arbeitsstation im zugeklappten Zustand;
- Fig. 2: eine perspektivische Darstellung mit Schrägsicht auf eine Unterseite einer Ausführungsform einer erfindungsgemäßen mobilen Arbeitsstation im zugeklappten Zustand;
- Fig. 3: eine perspektivische Darstellung einer Ausführungsform einer erfindungsgemäßen mobilen Arbeitsstation im aufgeklappten Zustand mit hochgeklappter Arbeitsplatte;
- Fig. 4: eine perspektivische Darstellung einer Ausführungsform einer erfindungsgemäßen mobilen Arbeitsstation im aufgeklappten Zustand mit auf der Arbeitsplatte angeordnetem Mobilgerät;
- Fig. 5: eine perspektivische Darstellung einer Ausführungsform einer erfindungsgemäßen mobilen Arbeitsstation im aufgeklappten Zustand mit auf der Arbeitsplatte angeordnetem Mobilgerät;
- Fig. 6: eine perspektivische Darstellung einer Ausführungsform einer erfindungsgemäßen mobilen Arbeitsstation im aufgeklappten Zustand mit einer ausgefahrenen Arbeitsplatte und einem darauf angeordnetem Mobilgerät;
- Fig. 7: eine perspektivische Darstellung einer Ausführungsform einer erfindungsgemäßen mobilen Arbeitsstation im aufgeklappten Zustand mit fest verbauten Leuchtelementen;
- Fig. 8A-8F: perspektivische Darstellungen einer weiteren Ausführungsform einer erfindungsgemäßen mobilen Arbeitsstation im aufgeklappten Zustand mit mobilen Leuchtelementen in unterschiedlichen Positionen und Orientierungen;
- Fig. 9A-9C: verschiedene Ausführungen des Griffelements des Gehäuses der mobilen Arbeitsstation.

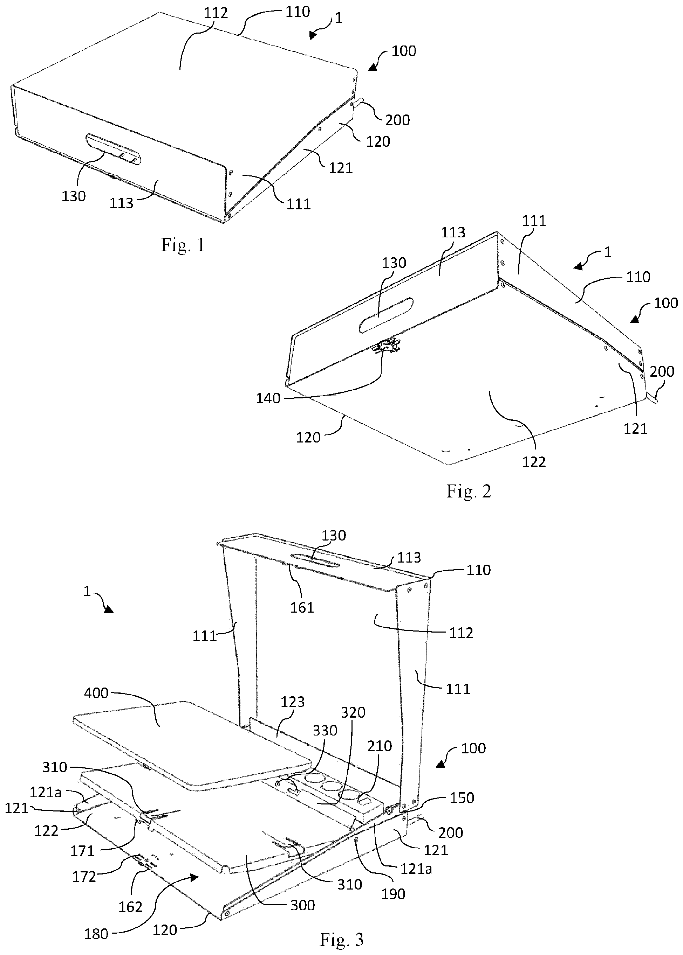

Die Figuren 1 und 2 zeigen zwei unterschiedliche perspektivische Darstellungen einer Ausführungsform einer erfindungsgemäßen mobilen Arbeitsstation 1 im zugeklappten Zustand. In der Figur 1 wird die mobile Arbeitsstation 1 von oben und in der Figur 2 von unten her betrachtet. Hierbei wird die mobile Arbeitsstation 1 stets in einem Aufbewahrungszustand bzw. einem Transportzustand gezeigt, wobei hierbei das Gehäuse 100 zugeklappt ist, sodass die beiden Gehäuseteile 110, 120 einander aufliegend angeordnet sind und das Gehäuse 100 von allen Seiten geschlossen ist.

Das Gehäuse 100 weist hierbei ein Deckelelement 112 auf, welches im zugeklappten Zustand des Gehäuses 100 die Oberseite des Gehäuses bildet und Teil der ersten Gehäusehälfte 110 ist. Die erste Gehäusehälfte 110 liegt hierbei auf der zweiten Gehäusehälfte 120 auf, und wird demzufolge auch als obere Gehäusehälfte bezeichnet.

Die Stirnseite des Gehäuses 100 im zugeklappten Zustand ist durch das Stirnelement 113 der ersten Gehäusehälfte 110 gebildet, wohingegen die Rückseite des Gehäuses 100 durch das rückseitige Stirnelement 123 der zweiten Gehäusehälfte 120 geformt ist, wie der Figur 3 entnommen werden kann.

Im zugeklappten Zustand des Gehäuses 100 zeigt hierbei die Außenseite des Stirnelements 113 in die Richtung in welcher ein Benutzer der mobilen Arbeitsstation 1 sich bei Benutzung der mobilen Arbeitsstation 1 aufhält, wobei die Seite der mobilen Arbeitsstation 1, von welcher der Benutzer aus die Arbeitsstation bedient, die Vorderseite darstellt. Die übrigen Seitenbezeichnungen "seitlich", "hinten", "oben" und "unten" sind hierbei selbsterklärend.

Das erste Gehäuseteil 110 weist weiterhin an den beiden das Stirnelement 113 angrenzenden Seiten jeweils Seitenelemente 111 auf, welche einander gegenüberliegend angeordnet sind und welche ob ihrer Zugehörigkeit zum ersten Gehäuseteil 110 als erste Seitenelemente 111 bezeichnet werden. Die ersten Seitenelemente 111 und das Stirnelement 113 bilden somit bei Betrachtung senkrecht zum Deckelelement 112 im Wesentlichen eine U-förmige Anordnung.

Weiterhin weist auch das zweite Gehäuseteil 120 zwei Seitenelemente 121 auf, welche einander gegenüberliegend angeordnet sind, und auch als zweite Seitenelemente 121 bezeichnet werden. Die zweiten Seitenelemente 121 und das rückseitige Stirnelement 123 bilden somit bei Betrachtung senkrecht zum Bodenelement 122 im Wesentlichen eine U-förmige Anordnung.

Das Stirnelement 113 der ersten Gehäusehälfte 110 ist in der vorliegenden Ausführung mit den ersten Seitenelementen 111 verschraubt, wobei es auch denkbar wäre, dass das Stirnelement 113 anderweitig bspw. durch Schweißen, Kleben oder mechanisches Umformen gebildet bzw. gekoppelt werden kann.

In der dargestellten Ausführung des Gehäuses 100, gehen die ersten Seitenelemente 111 bzw. die zweiten Seitenelemente 121 jeweils integral aus dem Deckelelement 112 bzw. Bodenelement 122 hervor, wobei diese ersten und zweiten Seitenelemente 111, 121 beispielsweise durch einen Umformprozess, bzw. einen Biegeprozess gebildet wurden.

In der Figur 2 ist weiterhin das Verschlusselement 140 dargestellt, welches an der Außenseite des Bodenelements 122 angeordnet ist. Wie der Figur 3 entnommen werden kann, interagiert das Verschlusselement 140 mit den ersten Verschlussteilen 161 welche Bestandteil des ersten Gehäuseteils 110 sind. Diese ersten Verschlussteile 161 werden durch die komplementären ersten Verschlussöffnungen 162 zur Außenseite des Bodenelements 122 durchgeführt um dort reversibel mit dem Verschlusselement 140 zu verrasten, sodass das Gehäuse 100 im zugeklappten Zustand gesichert ist und ein versehentliches Aufklappen des Gehäuses 100 vermieden wird.

Die Figur 3 zeigt eine Ausführungsform der mobilen Arbeitsstation 1 im aufgeklappten Zustand. Der erste Gehäuseteil 110 ist hierbei mit dem zweiten Gehäuseteil 120 über ein Verbindungselement 150 verbunden, wobei das Verbindungselement 150 ein Scharnier 150 sein kann. Im aufgeklappten Zustand des ersten Gehäuseteils 110 und des zweiten Gehäuseteils 120 sind die beiden Gehäuseteile 110, 120 hierbei zumindest in einer ersten Näherung in einem Winkel von 90° - bzw. in einem Winkelbereich von 85° bis 95° - zueinander angeordnet.

Im Inneren des Gehäuses 100 bzw. im Innenraum der mobilen Arbeitsstation 1 ist die Arbeitsplatte 300 angeordnet, welche zur Positionierung eines Mobilgeräts 400 oder anderen Arbeitsutensilien ausgebildet ist. In der gezeigten Ausführung ist die Arbeitsplatte 300 über Koppelelemente 190 mit dem Gehäuse 100, bzw. dem zweiten Gehäuseteil 120, und insbesondere mit den zweiten Seitenelementen 121 gekoppelt.

Der Figur 3 ist ebenfalls zu entnehmen, dass die zweiten Seitenelemente 121 jeweils ein zusätzliches seitliches Wandelement 121a aufweisen können, wobei dieses jeweils an der Innenseite des entsprechenden zweiten Seitenelements 121 angeordnet ist. Mittels dieser seitlichen Wandelemente 121a wird die Stabilität des Gehäuses 100 erhöht, wobei dadurch auch die Kopplung zwischen Arbeitsplatte 300 und dem zweiten Gehäuseteil 120 verstärkt ist. Die seitlichen Wandelemente 121a sind dabei derart gestaltet, dass sie jeweils das zugehörige zweite Seitenelement 121 seitlich überragen, sodass im zugeklappten Zustand des Gehäuses 100 die seitlichen Wandelemente 121a jeweils innenseitig an das zugehörige erste Seitenelement 111 angrenzen. Durch diese Gestaltung ist die Stabilität des Gehäuses 100 zusätzlich erhöht, da die seitlichen Wandelemente 121a eine Scherbewegung der zweiten Gehäusehälfte 120 zur ersten Gehäusehälfte 110 verhindern, und somit insbesondere das Verbindungselement 150 entlasten. Zudem wirken die seitlichen Wandelemente 121a wie eine Dichtungslippe, sodass im zugeklappten Zustand des Gehäuses 100, also im Transport- bzw. Lagerungszustand der mobilen Arbeitsstation 1, die beiden Seitenflächen des Gehäuses 100, welche durch die ersten und zweiten Seitenelemente 111, 121 gebildet sind, das Innere des Gehäuses 100 vor Verschmutzung und insbesondere vor Spritzwasser schützen. Selbstverständlich ist es ebenfalls denkbar, dass die seitlichen Wandelemente 121a jeweils mit dem zugehörigen zweiten Seitenelement 121 integral ausgebildet sind.

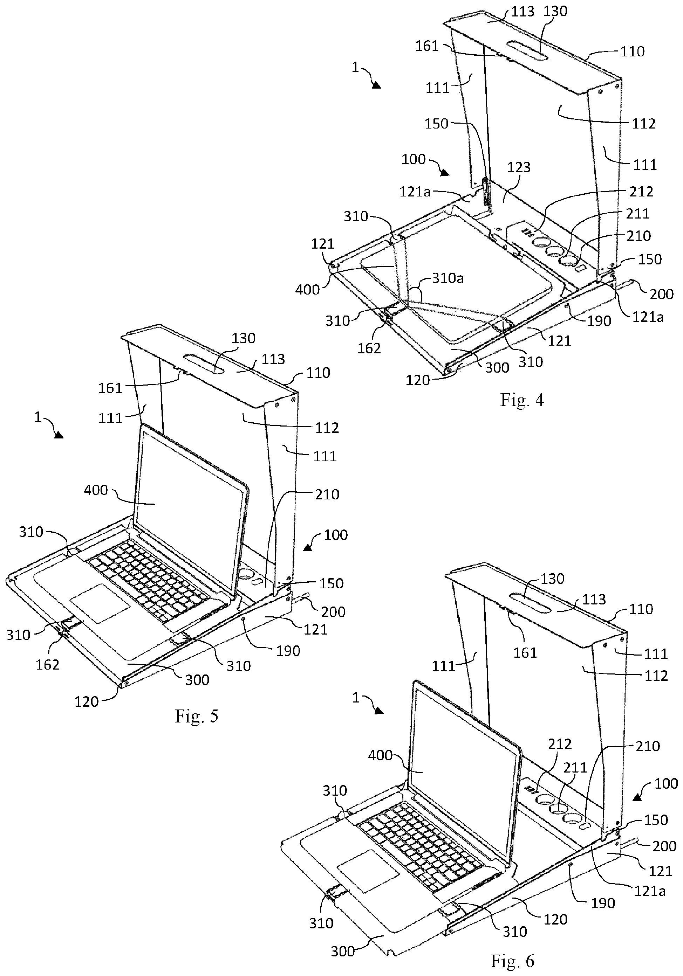

Wie in Figur 6 gezeigt ist, können die zweiten Seitenelemente 121, bzw. sofern vorhanden die seitlichen Wandelemente 121a über ein Schienensystem verfügen, welches Teil der Koppelelemente 190 sein kann, über welches die Arbeitsplatte 300 ausfahrbar relativ zum zweiten Gehäuseteil 120 gestaltet ist.

Das Mobilgerät 400 schwebt in der Darstellung der Figur 3 explosionsdarstellungsartig über der Arbeitsplatte 300, wobei letztere relativ zum zweiten Gehäuseteil 120 geringfügig hochgeklappt dargestellt ist. Im Betriebszustand ist bevorzugter Weise die Arbeitsplatte 300 angewinkelt zum Bodenelement 122 angeordnet und mit diesem gekoppelt, sodass die Arbeitsplatte 300 eine leichte Steigung relativ zur Bodenplatte bzw. zum Bodenelement 122 aufweist. Bevorzugt sind hierbei die beiden zweiten Seitenelemente 121 zumindest näherungsweise parallelverlaufend zur Seitenkante der Arbeitsplatte 300 geformt, sodass die Arbeitsplatte 300 auch von den Seiten her als Armauflage benutzbar ist. Hierzu sind die zweiten Seitenelemente 121 näherungsweise keilförmig geformt. Die ersten Seitenelemente 111 sind hierbei bevorzugt komplementär dazu geformt, sodass im zugeklappten Zustand des Gehäuses 100 in einer Seitenansicht der mobilen Arbeitsstation 1 die ersten und zweiten Seitenelemente 111, 121 zusammen eine rechteckige Form bilden.

Diese Steigung der Arbeitsplatte 300 fördert hierbei die Bedienbarkeit beispielsweise eines auf der Arbeitsplatte 300 angeordneten Mobilgeräts 400, und begünstigt weiterhin die Bildung eines Stauraums 180 zwischen dem Bodenelement 122 und der Arbeitsplatte 300. Dieser Stauraum 180 kann beispielsweise dazu genutzt werden, Dokumente, elektronische Geräte, oder sonstige Arbeitsutensilien in der mobilen Arbeitsstation 1 zu verstauen, wobei diese Arbeitsutensilien dann sowohl im aufgeklappten Zustand des Gehäuses 100, bzw. im Betriebszustand der Arbeitsstation 1, als auch im zugeklappten Zustand des Gehäuses 100, bzw. im Transport- oder Lagerungszustand der Arbeitsstation 1 gesichert gelagert sind und insbesondere durch die umgebenden Elemente Bodenelement 122, zweite Seitenelemente 121, rückseitiges Stirnelement 123 und Arbeitsplatte 300 geschützt sind. Durch die bevorzugt hochklappbare Arbeitsplatte 300 kann besonders einfach und schnell auf Arbeitsutensilien zugegriffen oder diese verstaut werden.

Die Kopplung der Arbeitsplatte 300 mit dem Bodenelement 122 kann hierbei ebenfalls durch das auf der Außenseite des Bodenelements 122 angeordnete Verschlusselement 140 realisiert sein, wobei hierfür zweite Verschlussteile 171, welche Teil der Arbeitsplatte 300 sind, durch die zweiten Verschlussöffnungen 172 des Bodenelements 122 durchgeführt werden, und dann mit dem Verschlusselement 140 reversibel mechanisch koppeln. Diese Kopplung kann - wie auch die Kopplung der ersten Verschlussteile 161 mit dem Verschlusselement 140 - durch Betätigung des Verschlusselements 140 gelöst werden, sodass die Arbeitsplatte 300 - bzw. der erste Gehäuseteil 110 - relativ zum zweiten Gehäuseteil 120 verstellbar ist.

In der gezeigten Ausführungsform der Figur 3 kann die Arbeitsplatte 300 weiterhin über Sicherungselemente 310 verfügen, welche beispielsweise dazu ausgebildet sind mit einem weiteren Sicherungselement 310a, bspw. einem Gummi 310a, zu interagieren um Gegenstände welche auf der Arbeitsplatte 300 angeordnet sind vor einem Verrutschen oder einer Wegnahme zu schützen. Die Sicherungselemente 310 der Ausführung aus Figur 3 sind integraler Bestandteil der Arbeitsplatte 300.

Zudem weist die Arbeitsplatte 300 an der dem rückseitigen Stirnelement 123 des Gehäuses 100 zugewandten Seite ein Begrenzungselement 320 auf, welches aus der Ebene der Arbeitsplatte 300 angewinkelt hervorsteht. Das Begrenzungselement 320 verhindert insofern ein Verschieben von auf der Arbeitsplatte 300 angeordneten Gegenständen über diese rückseitige Kante der Arbeitsplatte 300. Hierdurch wird bewerkstelligt, dass beispielsweise ein Mobilgerät 400, welches auf der Arbeitsplatte 300 angeordnet ist, stets einen gewissen Mindestabstand zur Innenfläche des Deckelelements 112 im aufgeklappten Zustand des Gehäuses 100 hat. Dies ist insbesondere hinsichtlich der später thematisierten Beleuchtung durch die Lichtabgabemittel 500 der mobilen Arbeitsstation 1 relevant. Zudem unterstützt das Begrenzungselement 320 die Halterung des Mobilgeräts 400 oder anderen Arbeitsutensilien auf der Arbeitsplatte 300. In der hier gezeigten Ausführung weist das Begrenzungselement 320 weiterhin zwei Kabelführungselemente 330 auf.

Zudem verfügt die mobile Arbeitsstation 1 in der gezeigten Ausführung der Figur 3 über eine Anschlussleiste 210, welche an der Innenseite des rückseitigen Stirnelements 123 angeordnet ist. Die Anschlussleiste 210 dient hierbei sowohl zur Stromversorgung der Arbeitsgeräte, wie beispielsweise des Mobilgeräts 400, als auch zur Versorgung mit Datensignalen, beispielsweise einen Ethernet-Zugang oder einem USB-Hub. Hierfür verfügt die mobile Arbeitsstation 1 eine Kabelleitung 200, welche die Anschlussleiste 210 mit Strom und Datensignalen versorgt, wobei die Kabelleitung 200 hierfür an entsprechende externe Anschlussstellen der Homeoffice-Umgebung anzuschließen ist.

Die Kabelleitung 200 ist hierbei durch das rückseitige Stirnelement 123 von der im Inneren des Gehäuses 100 angeordneten Anschlussleiste 210 zur Außenseite der mobilen Arbeitsstation 1 geführt. Die Anschlussleiste 210 weist bevorzugt zumindest einen Stromanschluss 211, 212, insbesondere einen Wechselstromanschluss 211 und/oder einen Gleichstromanschluss 212, und/oder zumindest einen Datenanschluss 212 auf. Dies ist im Ausführungsbeispiel der Figur 3 durch USB-Steckplätze zur Daten- und Stromversorgung, sowie durch herkömmliche Wechselstromanschlüsse realisiert.

Die Figuren 4 bis 6 zeigen unterschiedliche Anordnungen der mobilen Arbeitsstation 1 im aufgeklappten Zustand des Gehäuses 100 bzw. eines Systems zur Mobilarbeit bestehend aus der mobilen Arbeitsstation 1 und dem Mobilgerät 400. In der Figur 4 ist hierbei die mobile Arbeitsstation 1 mit aufgeklappten Gehäuse 100 gezeigt, wobei das Mobilgerät 400 noch durch die Sicherungselemente 310 und die weiteren Sicherungselemente 3 10a auf der Arbeitsplatte 300 gesichert angeordnet ist. Das Mobilgerät 400 könnte hierbei an die Anschlussleiste 210 zur Strom bzw. Datenübertragung angeschlossen sein, wobei das Kabel zum Anschluss an die Anschlussleiste mittels der Kabelführungselemente 330 gesichert und geordnet wären. Dies ist allerdings in der Figur 4 nicht dargestellt.

Sofern der Benutzer das Mobilgerät 400, das in der Figur 4 als Laptop 400 dargestellt ist, verwenden möchte, oder die Arbeitsplatte 300 anderweitig benutzen möchte, muss er zunächst die weiteren Sicherungselemente 310a entfernen, sodass er das Mobilgerät 400 bedienen bzw. von der Arbeitsplatte 300 entfernen kann. Ein solches bedienbereites Mobilgerät 400 ist in der Figur 5 dargestellt, wobei das Mobilgerät 400 auf der Arbeitsplatte 300 positioniert ist.

Die Figur 6 zeigt ebenfalls ein bedienbereites Mobilgerät auf einer mobilen Arbeitsstation 1, wobei hierbei die Arbeitsplatte 300 relativ zum zweiten Gehäuseteil 120 ausgefahren ist. Dies kann beispielsweise durch ein Schienensystem ermöglicht sein, welches Teil des Koppelelements 190 ist, sodass der Benutzer die Position der Arbeitsplatte 300 verstellen kann und so insbesondere den Abstand der Arbeitsplatte 300 und somit vom darauf angeordneten Mobilgerät 400 zum Deckelelement 112 anpassen kann. Das Schienensystem kann hierbei insbesondere auf den Wandelementen 121a realisiert sein. Zum Ausfahren der Arbeitsplatte 300 bedarf es bevorzugter Weise allerdings zunächst eines Lösens der Verbindung der Arbeitsplatte 300 zum Verschlusselement 140 und somit einer Entkopplung der Verbindung der Arbeitsplatte 300 mit dem Bodenelement 122, sodass die Arbeitsplatte 300 herausgezogen werden kann. Somit lässt sich die Anordnung des Mobilgeräts 400 und der mobilen Arbeitsstation 1 individuell an die Bedürfnisse des Benutzers anpassen, sodass die mobile Arbeitsstation 1 besonders vielseitig und flexibel einsetzbar ist.

Eine weitere erfindungswesentliche Komponente der mobilen Arbeitsstation 1 ist das zumindest eine Lichtabgabemittel 500, welches zur Abgabe eines eine Arbeit eines Benutzers unterstützenden Lichts *L* ausgebildet ist. Mittels der mit zumindest einem Lichtabgabemittel 500 ausgestatteten mobilen Arbeitsstation 1 sollen die Probleme einer effizienten Beleuchtung im Zusammenhang mit der Nutzung eines Mobilgeräts 400 bei Homeoffice-Tätigkeiten auch unter professionellen Gesichtspunkten weitestgehend gelöst werden. Hierbei ist vorgesehen, dass das zumindest eine Lichtabgabemittel 500 zumindest eine der unten gelisteten Beleuchtungsfunktionen erfüllt. Bevorzugt ist vorgesehen, dass das zumindest eine Lichtabgabemittel 500dazu ausgebildet ist unterschiedliche Beleuchtungsfunktionen zu erfüllen.

Insbesondere lassen sich die unterschiedlichen Beleuchtungsfunktionen wie folgt klassifizieren:
a) Beleuchtung des Benutzers
b) Beleuchtung der Arbeitsplatte 300
c) Hinterleuchtung des Mobilgeräts 400
d) Beleuchtung der Umgebung der mobilen Arbeitsstation 1

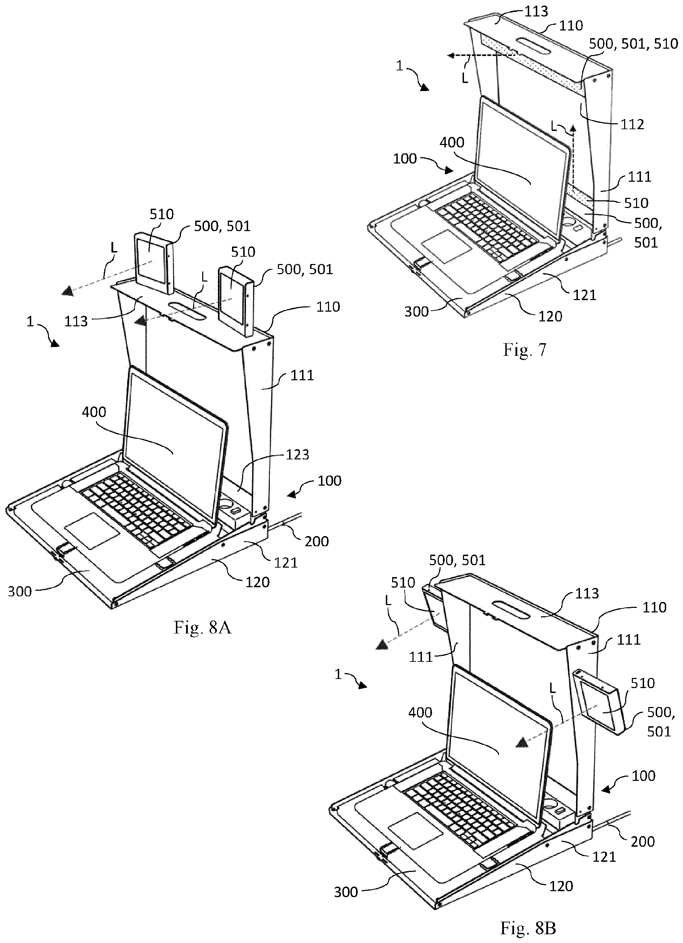

Zur Erfüllung dieser Beleuchtungsfunktionen werden hierbei zwei verschiedene Ausführungsformen der mobilen Arbeitsstation 1 mit zumindest einem Lichtabgabemittel 500 angegeben. Die Figuren 7 und 8A bis 8F stellen hierbei die verschiedene Ausführungsformen der mobilen Arbeitsstation 1 dar, wobei die Figur 7 die nicht erfindungsgemäße erste Ausführungsform der mobilen Arbeitsstation 1 mit zumindest einem Lichtabgabemittel 500, und die Figuren 8A bis 8F die zweite Ausführungsform der mobilen Arbeitsstation 1 mit zumindest einem Lichtabgabemittel 500 zeigt.

In der ersten Ausführungsform ist das zumindest eine Lichtabgabemittel 500 fest mit dem Gehäuse 100 der mobilen Arbeitsstation verbunden und ist bevorzugt auf der Innenseite des ersten oder zweiten Gehäuseteils 110, 120 angeordnet. In der zweiten Ausführungsform wird das zumindest eine Lichtabgabemittel 500 auch als mobiles Leuchtelement 500 bezeichnet, wobei das zumindest eine mobile Leuchtelement 500 auf einer Innenfläche und/oder auf einer Außenfläche des ersten oder zweiten Gehäuseteils 110, 120 der mobilen Arbeitsstation 1 reversibel befestigt ist.

Das zur Erfüllung der *Beleuchtungsfunktion a)* abgegebene Licht *L* hat das Ziel, den Benutzer, der die mobile Arbeitsstation 1 nutzt, mit einer gewissen Helligkeit zu beleuchten. Dies ist insbesondere dann von Vorteil, wenn beispielsweise ein in der mobilen Arbeitsstation 1 befindliches Mobilgerät 400, bzw. Laptop 400, zur Durchführung von Videokonferenzen genutzt wird und hierfür ein Kamerabild des Benutzers erfasst werden soll. Oft ist die an einem herkömmlichen Homeoffice-Arbeitsplatz zur Verfügung gestellte Beleuchtung nicht ausreichend für eine optimale Videoaufnahme bzw. die Farbtemperatur des zur Verfügung stehenden Lichts wirkt sich negativ auf die Videoaufnahme aus. Dieses Problem kann mithilfe des zumindest einen Lichtabgabemittels 500 der mobilen Arbeitsstation 1 effizient gelöst werden, da nunmehr sichergestellt ist, dass aufgrund dieser gezielten zusätzlichen Beleuchtung durch das Lichtabgabemittel 500 eine optimale Bildaufnahme gewährleistet werden kann. Selbstverständlich kann dieser Effekt auch gegebenenfalls mithilfe eines weiteren Lichtabgabemittels 500 realisiert werden. In den Figuren 7 und 8A sind beispielhaft denkbare Anordnungen der Lichtabgabemittel 500 zur Erfüllung der Beleuchtungsfunktion a) gezeigt. In der Figur 7 ist die nicht erfindungsgemäße erste Ausführungsform der mobilen Arbeitsstation 1 mit fest mit dem Gehäuse 100 gekoppelten Lichtabgabemitteln 500 gezeigt, wobei hierbei das obere Lichtabgabemittel 500 zur Lichtabgabe *L* in Richtung des Benutzers ausgebildet ist. In der Figur 8A sind die mobile Leuchtelemente 500 auf der Außenseite des Stirnelements 113 und mit der Lichtabgabefläche 510 zur Vorderseite in Richtung Benutzer schauend positioniert, sodass eine Lichtabgabe *L* zur Vorderseite der mobilen Arbeitsstation hin erfolgt. Da diese derartige Lichtabgabe *L* für die Beleuchtungsfunktion a) insbesondere auch unmittelbar auf den Benutzer gerichtet ist, muss gewährleistet sein, dass Blendungen vermieden werden. Insbesondere wird also eine blendfreie Lichtabgabe angestrebt, welche durch die Nutzung einer möglichst großen Lichtabgabefläche 510 des zumindest einen Lichtabgabemittels 500 und damit einer eher geringeren Leuchtdichte ermöglicht wird, wobei das Licht über die Lichtabgabefläche 510 möglichst homogen abgegeben werden soll.

Zur Erfüllung der *Beleuchtungsfunktion b)* wird zumindest ein Lichtabgabemittel 500 verwendet, welches Licht *L* zur Vorderseite hin abgibt, welches auf die Arbeitsplatte 300 bzw. das Mobilgerät 400 gerichtet ist, sodass der Arbeitsbereich des Benutzers, also insbesondere die Arbeitsplatte 300, eine Tastatur eines Laptops oder Tablets oder dergleichen beleuchtet ist. Auf, vor bzw. neben der Arbeitsplatte 300 platzierte Dokumente und Arbeitsgeräte können aufgrund dieser Beleuchtung dann ebenfalls besser gesehen und gelesen werden, insbesondere auch dann, wenn durch die Umgebungsbeleuchtung des Ortes bzw. des Raumes kein ausreichendes Licht hierfür zur Verfügung gestellt wird. Wie nun insbesondere der Darstellung von Figur 8B entnommen werden kann, sind die Lichtabgabemittel 500 bzw. die mobilen Leuchtelemente 500 der mobilen Arbeitsstation 1 zur Lichtabgabe *L* in Richtung der Vorderseite bzw. der Arbeitsplatte 300 ausgebildet, wobei die Leuchtengehäuse 501 jeweils seitlich an der Außenseite der ersten Seitenelemente 111 und leicht geneigt angeordnet sind, sodass die Arbeitsplatte 300 bzw. das Mobilgerät 400 und der die Arbeitsplatte 300 umgebende Bereich beleuchtet wird.

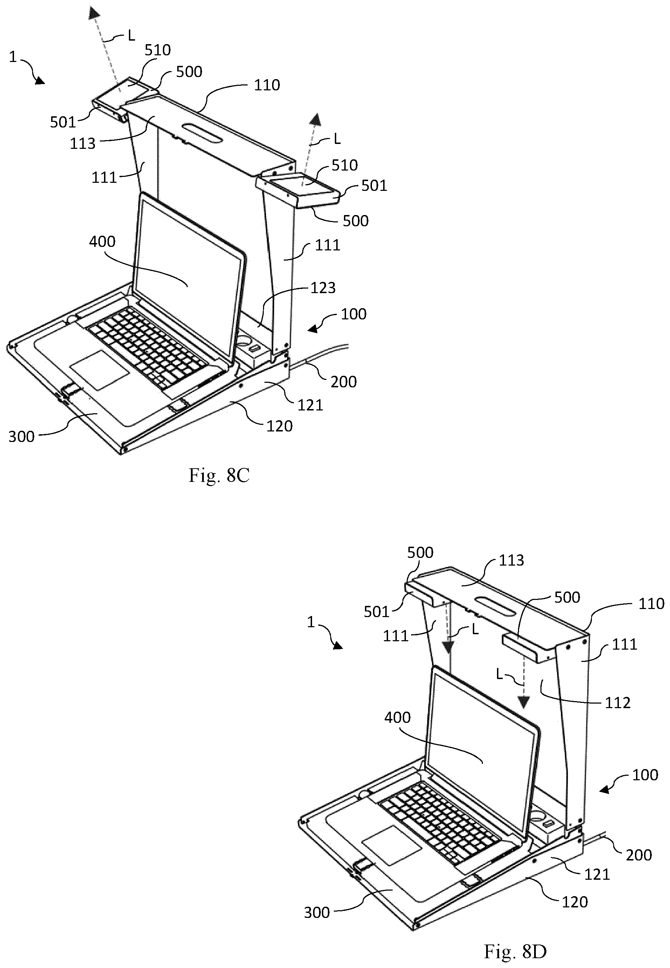

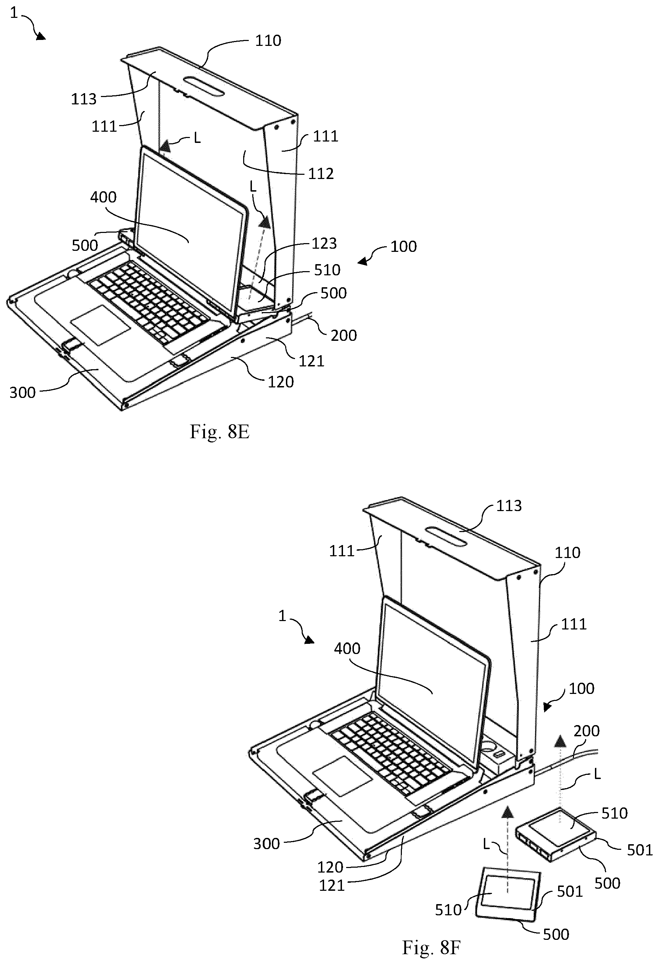

Die *Beleuchtungsfunktion c)* wird durch eine Anordnung des zumindest einen Lichtabgabemittels 500 erzielt, in welcher durch die Lichtabgabe *L* starke Lichtkontraste, welche sich insbesondere durch die Monitorleuchtdichte eines Mobilgeräts 400 in einer dunklen Umgebung ergeben, vermieden werden. Derartige starke Lichtkontraste erschweren das Arbeiten eines Benutzers deutlich, da eine häufige und intensive Adaption des menschlichen Auges erforderlich ist. Hierbei erfolgt die Lichtabgabe L des zumindest einen Lichtabgabemittels 500 in Richtung der Innenseite des Deckelelements 112, wobei diese bevorzugt reflektierend, insbesondere diffus reflektierend ausgestaltet ist, sodass der Bildschirm des Mobilgeräts 400 hinterleuchtet wird und das abgegebene Licht L dazu beiträgt, starke Lichtkontraste zu vermeiden. In der Figur 7 ist dies beispielhaft durch das untere Lichtabgabemittel 500 realisiert, welches Licht in Richtung des Deckelelements 112 abgibt. In den Figuren 8D und 8E sind zudem Implementierungen dieser Beleuchtungsfunktion mittels mobiler Leuchtelemente 500 gezeigt, wobei in der Figur 8D die mobilen Leuchtelemente 500 an der Innenseite des Stirnelements 113 angeordnet sind und die Lichtabgabe L nach unten in Richtung der Innenseite des Deckelelements 112 erfolgt. In der Figur 8E hingegen liegen die mobilen Leuchtelemente 500 auf der Arbeitsplatte 300 auf und sind am unteren Ende des Deckelelements 112 mit demselben gekoppelt, wobei die Lichtabgabefläche 510 nach oben in Richtung des Stirnelements 113 weist und die Lichtabgabe L in Richtung der Innenseite des Deckelelements 112 erfolgt. Da die Innenseite des Deckelelements 112 stets hinter dem Mobilgerät 400 angeordnet ist, wird somit ein das Mobilgerät 400, bzw. den Bildschirm des Mobilgeräts 400 umrahmender leuchtender Bereich geschaffen, sodass eine angenehme Arbeitsatmosphäre geschaffen wird. Mittels der zuvor beschriebenen optionalen Ausziehbarkeit der Arbeitsplatte relativ zum zweiten Gehäuseteil 120 lässt sich überdies die Größe des umrahmenden leuchtenden Bereichs der Innenseite des Deckelelements 112 aus Sicht des Benutzers anpassen.

Weiterhin kann vorgesehen sein, dass die Umgebung der mobilen Arbeitsstation 1 bzw. der Raum in welchem sich die mobile Arbeitsstation 1 befindet, beleuchtet wird, um so eine Verbesserung der Arbeitsatmosphäre zu schaffen, wobei hierdurch die *Beleuchtungsfunktion d)* erfüllt wird. Hierbei ist es denkbar, dass das zumindest eine Lichtabgabemittel 500 zur Lichtabgabe L in Richtung eines der Rückseite der mobilen Arbeitsstation 1 zugewandten Bereichs - also ein der Außenseite des Deckelelements 112 im aufgeklappten Zustand des Gehäuses 100 zugewandter Bereich - oder in Richtung eines Bereichs oberhalb der mobilen Arbeitsstation 1 ausgebildet ist. Hierbei ist insbesondere denkbar, dass eine rückseitig zur mobilen Arbeitsstation 1 angeordnete Wand oder eine Decke des Raums in der sich die mobile Arbeitsstation 1 befindet beleuchtet werden. Insbesondere die Figur 8C zeigt eine derartige Anordnung der Lichtabgabemittel 500, welche die Umgebung der mobilen Arbeitsstation 1 beleuchten und sorgen somit für eine gewisse Grundhelligkeit im Raum in welchem die mobile Arbeitsstation 1 angeordnet ist. In diesem Fall beleuchtet das mittels des zumindest einen Lichtabgabemittel 500 abgegebene Licht dann einen Bereich hinter bzw. über der mobilen Arbeitsstation 1. Diese Lichtabgabe *L* kann dazu führen, dass sich die entsprechend angestrahlten Raumflächen kontrastmindernd auf Leuchtdichten des Mobilgeräts 400 bzw. des Bildschirms des Laptops 400 auswirken. Weiterhin kann derartig abgegebenes Licht dazu dienen, im Sinne einer Indirekt-Beleuchtung einen oberhalb der mobilen Arbeitsstation 1 befindlichen Deckenbereich eines Raums zu beleuchten. Ein sogenannter "Höhleneffekt", der sich beispielsweise bei einer unzureichenden Umgebungshelligkeit einstellen kann und die Arbeitssituation erschwert, kann auf diesem Wege eliminiert werden. Insgesamt wird somit also sowohl das Erscheinungsbild des Raums in der die mobile Arbeitsstation 1 sich befindet als auch die Arbeitsatmosphäre verbessert.

Anhand der obigen Beispiele ist ersichtlich, dass die Lichtabgabe L der mobilen Arbeitsstation 1 mittels Positionierung und Orientierung des zumindest einen Lichtabgabemittels 500 veränderbar ist.

Hinsichtlich der ersten Ausführungsform der mobilen Arbeitsstation 1 mit zumindest einem Lichtabgabemittel 500 ist zudem zu erwähnen, dass zwar das Leuchtengehäuse 501 der Lichtabgabemittel 500 gemäß der ersten Ausführung fest mit dem Gehäuse 100 der mobilen Arbeitsstation 1 verbunden ist, es allerdings dennoch denkbar ist, dass die Lichtabgabeflächen 510 orientierbar und insbesondere schwenkbar mit dem Leuchtengehäuse 501 verbunden sind, sodass auch bei den fest gekoppelten Lichtabgabemitteln 500 die Richtung der Lichtabgabe L des zumindest einen Lichtabgabemittels 500 verstellbar ist, und insbesondere bevorzugt relativ zum ersten Gehäuseteil 110 verstellbar ist. Somit können in einer solchen Ausgestaltung auch durch ein fest verbautes Lichtabgabemittel 500 verschiedene Beleuchtungsfunktionen erfüllt werden. Beispielsweise könnte das in der Figur 7 oben angeordnete Lichtabgabemittel 500 schwenkbar ausgebildet sein, sodass es zur Beleuchtung der Innenseite des Deckelelements 112 verwendet werden kann. Auch könnte ein mit dem Gehäuse 100 fest verbundenes Lichtabgabemittel 500 auf dem Stirnelement 113 und/oder der Außenseite des Deckelelements 112 angeordnet sein, sodass hierdurch verschiedene Beleuchtungsfunktionen auch mittels eines festen Lichtabgabemittels 500 erzielt werden können.

Während derartige Anpassungen also durchaus auch mit Lichtabgabemitteln 500, deren Leuchtengehäuse 501 fest mit dem Gehäuse 100 verbunden sind, möglich sind, ist die Flexibilität in der erfindungsgemäßen Ausführungsform mit mobilen Leuchtelementen 500 stark verbessert, da diese praktisch frei wählbar auf der Innen- und/oder auf der Außenseite des Gehäuses positionierbar sind.

Bevorzugt weist hierfür das mobile Leuchtelement 500 Befestigungsmittel zur lösbaren Befestigung an der mobilen Arbeitsstation 1 auf, wobei weiterhin bevorzugt die Befestigungsmittel zur flexiblen Befestigung durch Magnete gebildet sind. Zudem kann vorgesehen sein, dass zumindest ein Teil der Befestigungsmittel im Inneren des Leuchtengehäuses 501 angeordnet ist, oder dass dieser integral mit dem Leuchtengehäuse 501 ausgebildet ist.

Weiterhin kann vorgesehen sein, dass die Lichtabgabe *L* sowohl des fest mit dem Gehäuse 100 gekoppelten Lichtabgabemittels 500 als auch des mobilen Leuchtelements 500 über die Orientierung bzw. Positionierung hinaus einstellbar ist, wobei insbesondere die Helligkeit und/oder die Farbtemperatur veränderbar ist.

Vorzugsweise besteht hierbei die Möglichkeit, das von dem zumindest einem Lichtabgabemittel 500 abgegebene Licht *L* jeweils individuell hinsichtlich seiner Intensität und/oder Farbe bzw. Farbtemperatur einzustellen. Es wird in diesem Fall die Möglichkeit geschaffen, das abgegebene Licht L jeweils an die Präferenzen des Benutzers anzupassen. Dabei wäre es beispielsweise denkbar, die Farbtemperatur des durch ein Lichtabgabemittel 500 zur Vorderseite hin in Richtung des Benutzers abgegebenen Lichts *(Beleuchtungsfunktion* a)) etwas geringer zu wählen, um die Ausleuchtung beispielsweise eines Gesichts des Benutzers in einem wärmeren und damit angenehmeren Farbton erscheinen zu lassen. Für die Indirekt-Beleuchtung zur Oberseite oder zur Rückseite hin *(Beleuchtungsfunktion d))* oder für die Beleuchtung der Arbeitsplatte 300 (*Beleuchtungsfunktion b))* hingegen kann - gegebenenfalls tageszeitabhängig - das Licht auch einen etwas kälteren Farbton aufweisen, um eine anregende Wirkung zu entfalten.

Hierbei kann das zumindest eine Lichtabgabemittel 500 Bedientasten zur Anpassung der Lichtabgabe *L* und/oder zum An- und Ausschalten des mobilen Leuchtelements 500 aufweist. Weiterhin kann bevorzugt das zumindest eine Lichtabgabemittel 500 zumindest eine Sensoreinheit zur automatischen Anpassung der Lichtabgabe *L* aufweisen, wobei die Sensoreinheit bei der Anpassung der Lichtabgabe *L* insbesondere Daten hinsichtlich der Umgebungshelligkeit, Zeit, Position und/oder Ausrichtung zumindest einen Lichtabgabemittels 500 berücksichtigt.

Insgesamt kann also durch die Positionierung sowie durch eine entsprechende Ansteuerung des zumindest eine Lichtabgabemittels 500 eine optimale Beleuchtungssituation für die Fernarbeit mittels der mobilen Arbeitsstation 1 geschaffen werden. Aufgrund der Flexibilität der Anordnung und Einstellung der mobilen Arbeitsstation 1 und deren zumindest einen Lichtabgabemittel 500 kann hierbei für unterschiedlichste Situationen eine optimale Beleuchtungssituation geschaffen werden.

Das zumindest eine Lichtabgabemittel 500 weist bevorzugt LED-Leuchtmittel, und weiterhin bevorzugt Mittel zur Energiespeicherung, insbesondere einen wiederaufladbaren Akkumulator, auf. Weiterhin ist denkbar, dass das Gehäuse 110 über Induktivladeflächen verfügt, an welchen ein mobiles Leuchtelement 500 positioniert werden kann, sodass das mobile Leuchtelement 500 während des Betriebs geladen werden kann.

Das zumindest eine mobile Leuchtelement 500 der mobilen Arbeitsstation 1 ist zudem bevorzugt handlich und möglichst schmal dimensioniert, sodass es im zugeklappten Zustand des Gehäuses 100 im Inneren des Gehäuses 100 angeordnet sein kann.

Auch können die mobilen Leuchtelemente 500 außerhalb der mobilen Arbeitsstation 1 beispielsweise auf einem Schreibtisch angeordnet sein, und so die Umgebung der mobilen Arbeitsstation 1 *(Beleuchtungsfunktion d))* beleuchten, wie es exemplarisch in der Figur 8F gezeigt ist.

Zudem kann selbstverständlich vorgesehen sein, mehrere fest mit dem Gehäuse gekoppelte Lichtabgabemittel 500 und/oder mehrere mobile Leuchtelement 500 in einer mobilen Arbeitsstation 1 zu verwenden. Zudem ist es ebenfalls denkbar in einer mobilen Arbeitsstation 1 sowohl zumindest ein fest mit dem Gehäuse gekoppeltes Lichtabgabemittel 500 als auch zumindest ein mobiles Leuchtelement 500 zu verwenden. Bei mehreren Lichtabgabemitteln 500 können insbesondere mehrere verschiedene Beleuchtungsfunktionen bedient werden.

Das Gehäuse 100 ist bevorzugt aus Holz, Metall, Kunststoff oder einem Mix der verschiedenen Materialien gebildet. Besonders bevorzugt ist das erste Gehäuseteil 110 zumindest teilweise durch magnetische Materialien gebildet, wobei insbesondere Stahlblech bevorzugt Verwendung findet.

Die Arbeitsplatte 300 kann aus unterschiedlichen Materialen geformt sein. Insbesondere ist denkbar, dass die Arbeitsplatte 300 aus Holz, Metall oder Kunststoff geschaffen ist. Insbesondere kann vorgesehen sein, dass die Sicherungselemente 310 gummiert beschaffen sind, sodass ein Verrutschen von auf der Arbeitsplatte 300 angeordneten Arbeitsutensilien, bzw. einem auf der Arbeitsplatte 300 angeordneten Mobilgerät 400, verhindert ist. Bevorzugt ist die Arbeitsplatte 300 derart dimensioniert, dass ein Mobilgerät 400 mit einer Displaygröße von zumindest 13 Zoll positioniert werden kann. Bevorzugt können Mobilgeräte 400 mit einer Displaygröße von 17 Zoll auf der Arbeitsplatte 300 angeordnet werden, wobei auch größere oder kleinere Displaygrößen denkbar sind.

Das Verbindungselement 150 kann vorzugsweise zudem Halteelemente aufweisen, welche das Gehäuse 100 im aufgeklappten Zustand halten und ein versehentliches Zuklappen des Gehäuses 100 verhindern.

Es sind auch Ausführungen denkbar, in welchen das Verbindungselement 150 beispielsweise durch ein biegbares Wandelement gebildet ist, welches insbesondere integral aus dem rückseitigen Stirnelement 123 hervorgehen kann, und so das Deckelelement 112 und das Bodenelement 122 miteinander verbindet.

Weiterhin können die Kabelführungselemente 330 auch als Sicherungselemente 310 verwendet werden, wobei diese dann auch mit weiteren Sicherungselementen 310a interagieren können und so zusätzlich den Verbleib beispielsweise eines Mobilgeräts 400 auf der Arbeitsplatte 300 sichern. Es sind allerdings auch Sicherungselemente 310 denkbar, welche für sich genommen - also ohne weitere Sicherungselemente 310a - Gegenstände auf der Arbeitsplatte 300 sichern.

Zudem kann der Stauraum 180 auch als Verstauraum für Leitungen und Kabel benutzt werden.

Eine weitere, in den Figuren nicht dargestellte vorteilhafte Weiterbildung der Erfindung kann auch darin bestehen, das Gehäuse 100 oder zumindest eines der Leuchtelemente 500 mit einer Kamera zu versehen.

Zum einen könnte diese Kamera dann als Sensor zum Erfassen der Beleuchtungssituation genutzt werden, wobei dann darauf abgestimmt eine Einstellung der Lichtabgabe zumindest einiger der verschiedenen Leuchtmittel des Arbeitsplatzes 1 vorgenommen wird. Dies könnte dann insbesondere die Steuerung des für die *Beleuchtungsfunktion a)* genutzten Lichts betreffen, wobei also abhängig von dem von der Kamera erfassten Bild das Licht hinsichtlich seiner Intensität und Farbtemperatur derart angepasst wird, dass der Benutzer des Arbeitsplatzes 1 möglichst optimal für eine Videokonferenz beleuchtet wird.

Zum anderen könnte diese Kamera auch als Kamera zur Durchführung einer Videokonferenz genutzt werden und hierbei beispielsweise dann die ggf. qualitativ schlechtere Kamera des Laptops 400 ersetzen. Das von der Kamera des Arbeitsplatzes 1 erfasste Bild wird dann also nicht nur zur Optimierung der Lichteinstellung verwendet, sondern stellt gleichzeitig auch das für die Durchführung einer Videokonferenz genutzte Videobild zur Verfügung, wobei die Kamera hierzu dann drahtlos oder über ein Kabel (z.B. ein USB-Kabel) mit dem Laptop 400 gekoppelt sein könnte. In diesem Fall könnte die Kamera selbstverständlich auch ein entsprechendes Mikrofon aufweisen.

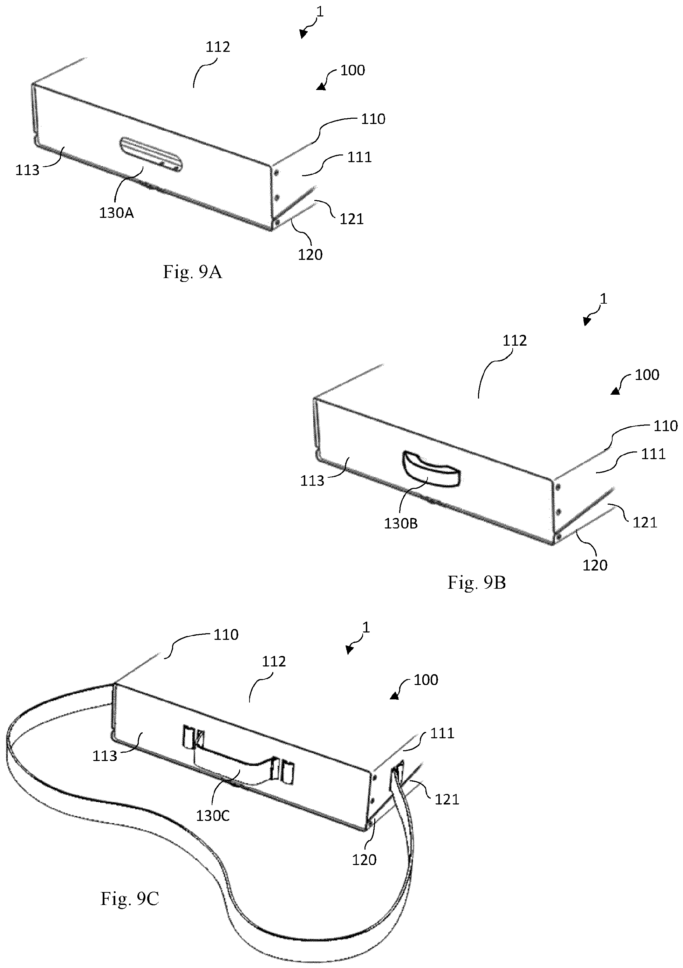

In den in den Figuren 1 bis 8 dargestellten Ausführungen verfügt das Stirnelement 113 weiterhin über ein Griffelement 130, welches hierbei als Grifföffnung 130A gebildet ist. Es sind allerdings noch andere Arten des Griffelements 130 denkbar, wobei insbesondere auch eine Ausgestaltung als Koffergriff 130B oder Riemen 130C denkbar ist, wie den Figuren 9A, 9B und 9C entnommen werden kann. Jede der unterschiedlichen Ausführungsformen hat hierbei besondere Vorzüge hinsichtlich der Portabilität, der Lagerung und dem Aufbau der mobilen Arbeitsstation 1, wobei beispielsweise die Grifföffnung 130A das Gehäuse 100 besonders platzsparend gestaltet, wohingegen der Koffergriff 130B einen besonders stabiles und ergonomisches Griffelement 130 bereitstellt, was insbesondere den Transport der mobilen Arbeitsstation erleichtert. Der Riemen 130C lässt sich an das Gehäuse 100 möglichst flach anlegen, sodass auch hier eine einfache und platzsparende Lagerung der mobilen Arbeitsstation 1 ermöglicht ist, wobei zugleich ein Schultergurt bereitgestellt wird, welche den Transport der Arbeitsstation 1 erleichtert.

Insgesamt ist folglich eine besonders flexibel einsetzbare, einfach zu installierende und gleichermaßen einfach abzubauende und zu verstauende mobile Arbeitsstation 1 geschaffen, welche zudem eine optimale Beleuchtungssituation für die Homeoffice-Arbeit bzw. Fernarbeit schafft und so die Arbeit des Benutzers unterstützt und Produktivität des Benutzers steigert.

## Patentansprüche

1. Mobile Arbeitsstation (1) gebildet durch ein aufklappbares Gehäuse (100),
wobei das Gehäuse (100) einen ersten Gehäuseteil (110) und einen zweiten Gehäuseteil (120) aufweist, wobei im zugeklappten Zustand des Gehäuses der erste und der zweite Gehäuseteil (110, 120) einander gegenüberliegend angeordnet sind,
wobei die mobile Arbeitsstation (1) eine Arbeitsplatte (300) zur Positionierung eines Mobilgeräts (400) aufweist, wobei die Arbeitsplatte (300) innerhalb des Gehäuses (100) angeordnet und mit dem Gehäuse (100) gekoppelt ist,
wobei die mobile Arbeitsstation (1) zumindest ein Lichtabgabemittel (500) zur Abgabe eines eine Arbeit eines Benutzers unterstützenden Lichts (L) aufweist, wobei das zumindest eine Lichtabgabemittel (500) mit dem ersten Gehäuseteil (110) gekoppelt ist,
und wobei das zumindest eine Lichtabgabemittel (500) ein mobiles Leuchtelement (500) ist, wobei das mobile Leuchtelement (500) ein Leuchtengehäuse (501) mit einer Lichtabgabefläche (510) aufweist und zur Lichtabgabe (L) über die Lichtabgabefläche (510) ausgebildet ist, wobei das mobile Leuchtelement (500) in unterschiedlichen Positionen und/oder Orientierungen auf einer Innenfläche des ersten Gehäuseteils (110) der mobilen Arbeitsstation (1) reversibel befestigbar ist,
und wobei je nach Position und/oder Orientierung des zumindest einen mobilen Leuchtelements (500) verschiedene Lichtabgabearten - wie beispielsweise eine direkte Beleuchtung des Benutzers oder der Arbeitsplatte, oder eine indirekte Beleuchtung des Benutzers oder der Arbeitsplatte, oder eine Hinterleuchtung des Mobilgeräts (400) - durch die mobile Arbeitsstation (1) realisiert sind.

2. Mobile Arbeitsstation gemäß Anspruch 1,
**dadurch gekennzeichnet,**
**dass** das mobile Leuchtelement (500) LED-Leuchtmittel aufweist, und bevorzugt Mittel zur Energiespeicherung, insbesondere einen wiederaufladbaren Akkumulator, aufweist.

3. Mobile Arbeitsstation gemäß einem der vorherigen Ansprüche 1 oder 2,
**dadurch gekennzeichnet,**
**dass** das mobile Leuchtelement (500) Befestigungsmittel zur lösbaren Befestigung an der mobilen Arbeitsstation (1) aufweist,
wobei bevorzugt die Befestigungsmittel zur flexiblen Befestigung durch Magnete gebildet sind,
und wobei besonders bevorzugt zumindest ein Teil der Befestigungsmittel im Inneren des Leuchtengehäuses (501) angeordnet ist, oder integral mit dem Leuchtengehäuse (501) ausgebildet ist.

4. Mobile Arbeitsstation gemäß einem der vorherigen Ansprüche 1 bis 3,
**dadurch gekennzeichnet,**
**dass** die Lichtabgabe (L) des mobilen Leuchtelements (500) einstellbar ist, wobei insbesondere die Helligkeit und/oder die Farbtemperatur veränderbar ist;
und/oder
**dass** das mobile Leuchtelement (500) Bedientasten zur Anpassung der Lichtabgabe (L) und/oder zum An- und Ausschalten des mobilen Leuchtelements (500) aufweist.

5. Mobile Arbeitsstation gemäß einem der vorherigen Ansprüche 1 bis 3,
**dadurch gekennzeichnet,**
**dass** das mobile Leuchtelement (500) zumindest eine Sensoreinheit zur automatischen Anpassung der Lichtabgabe (L) aufweist, wobei die Sensoreinheit bei der Anpassung der Lichtabgabe (L) insbesondere Daten hinsichtlich Umgebungshelligkeit, Zeit, Position und/oder Ausrichtung des mobilen Leuchtelements (500) berücksichtigt.

6. Mobile Arbeitsstation gemäß einem der vorherigen Ansprüche,
**dadurch gekennzeichnet,**
**dass** das erste und das zweite Gehäuseteil (110, 120) über ein Verbindungselement (150) miteinander gekoppelt sind, derart, dass im aufgeklappten Zustand das erste Gehäuseteil (110) und das zweite Gehäuseteil (120) zumindest in einer ersten Näherung in einem Winkel von 90° zueinander angeordnet sind.

7. Mobile Arbeitsstation gemäß einem der vorherigen Ansprüche,
**dadurch gekennzeichnet,**
**dass** das erste Gehäuseteil (110) ein sich räumlich erstreckendes Deckelelement (112) des Gehäuses (100), ein Stirnelement (113) und zwei erste Seitenelemente (111) aufweist,
wobei das Stirnelement (113) sowie die zwei ersten Seitenelemente (111) mit dem Grundelement (112) verbunden sind und jeweils senkrecht zum Grundelement angeordnet sind,
wobei die zwei ersten Seitenelemente (111) parallel zueinander an zwei gegenüberliegenden Seiten des Grundelements (112) angeordnet sind, und das Stirnelement (113) die zwei ersten Seitenelemente (111) verbindend angeordnet ist,
und/oder das zweite Gehäuseteil (120) ein sich räumlich erstreckendes Bodenelement (122) des Gehäuses (100), ein rückseitiges Stirnelement (123) und zwei zweite Seitenelemente (121) aufweist,
wobei die zwei zweiten Seitenelemente (121) parallel zueinander an zwei gegenüberliegenden Seiten des Bodenelements (122) angeordnet sind, und das rückseitige Stirnelement (123) die zwei ersten Seitenelemente (111) verbindend angeordnet ist,
wobei im zugeklappten Zustand des Gehäuses (100) das Stirnelement (113) und das rückseitige Stirnelement (123) zwei gegenüberliegenden Seiten des Gehäuses (100) bilden.

8. Mobile Arbeitsstation gemäß Anspruch 7,
**dadurch gekennzeichnet,**
**dass** die Arbeitsplatte (300) mit dem zweiten Gehäuseteil (120), bevorzugt mittels eines Koppelelements (190), gekoppelt ist,
wobei bevorzugt die Arbeitsplatte (300) angewinkelt zum Bodenelement (122) angeordnet ist, und wobei die Arbeitsplatte (300) bevorzugt relativ zum zweiten Gehäuseteil (120) ausfahrbar angeordnet ist,
und wobei weiterhin bevorzugt die Arbeitsplatte (300) relativ zum zweiten Gehäuseteil (120) hochklappbar angeordnet ist,
wobei zudem bevorzugt zwischen der Arbeitsplatte (300) und dem Bodenelement (122) ein Stauraum (180) gebildet ist.

9. Mobile Arbeitsstation gemäß einem der vorherigen Ansprüche 7 oder 8,
**dadurch gekennzeichnet,**
**dass** das Gehäuse (100) mittels einer Verschlussanordnung (161, 162, 140) reversibel verschließbar ist;
und/oder
**dass** die Arbeitsplatte (300) mit dem Bodenelement (122) mittels einer weiteren Verschlussanordnung (171, 172, 140) reversibel verbindbar ist;
und/oder
**dass** die Arbeitsplatte (300) an der dem rückseitigen Stirnelement (123) des Gehäuses (100) zugewandten Seite ein Begrenzungselement (320) aufweist, welches aus der Ebene der Arbeitsplatte (300) angewinkelt hervorsteht, wobei bevorzugt das Begrenzungselement (320) zumindest ein Kabelführungselement (330) aufweist.

10. Mobile Arbeitsstation gemäß einem der vorherigen Ansprüche,
**dadurch gekennzeichnet,**
**dass** die Arbeitsplatte (300) Sicherungselemente (310, 310a) aufweist, welche dazu ausgebildet sind ein auf der Arbeitsplatte (300) angeordnetes Mobilgerät (400), zu fixieren.

11. Mobile Arbeitsstation gemäß einem der vorherigen Ansprüche,
**dadurch gekennzeichnet,**
**dass** die mobile Arbeitsstation (1) eine Kabelleitung (200) zur Bereitstellung von Strom- und Datensignalen aufweist, welche bevorzugt mit einer im Inneren des Gehäuses (100) angeordneten Anschlussleiste (210) gekoppelt ist,
wobei bevorzugt die Anschlussleiste (210) zumindest einen Stromanschluss (211, 212), insbesondere einen Wechselstromanschluss (211) und/oder einen Gleichstromanschluss (212), und/oder zumindest einen Datenanschluss (212) aufweist.

12. Mobile Arbeitsstation gemäß einem der vorherigen Ansprüche,
**dadurch gekennzeichnet,**
**dass** das Gehäuse (100) ein Griffelement (130, 130A, 130B, 130C) aufweist, welches insbesondere als Grifföffnung (130A), Koffergriff (130B) oder Riemen (130C) gebildet ist; und/oder
**dass** das Gehäuse (100) und/oder eines der Lichtabgabemittel (500) eine Kamera aufweist.

13. System zur Mobilarbeit,
aufweisend eine mobile Arbeitsstation (1) gemäß einem der vorherigen Ansprüche, sowie ein Mobilgerät (400).

## Claims

1. Mobile workstation (1) formed by a foldable housing (100),
wherein the housing (100) comprises a first housing part (110) and a second housing part (120), wherein, in the closed state of the housing, the first and the second housing part (110, 120) are arranged opposite one another,
wherein the mobile workstation (1) comprises a worktop (300) for the positioning of a mobile device (400), wherein the worktop (300) is arranged inside the housing (100) and is coupled to the housing (100),
wherein the mobile workstation (1) comprises at least one light emission means (500) for emitting a light (L) supporting a user's work, wherein the at least one light emission means (500) is coupled to the first housing part (110),
and wherein the at least one light emission means (500) is a mobile lighting element (500),
wherein the mobile lighting element (500) comprises a lamp housing (501) having a light emission face (510), which lamp housing is designed to emit light (L) via the light emission face (510), wherein the mobile lighting element (500) can be reversibly fastened in different positions and/or orientations on an inner surface of the first housing part (110) of the mobile workstation (1),
and wherein, depending on the position and/or orientation of the at least one mobile lighting element (500), different types of light emission - such as direct illumination of the user or the worktop, or indirect illumination of the user or the worktop, or backlighting of the mobile device (400) - are achieved by the mobile workstation (1).

2. Mobile workstation according to claim 1,
**characterized in that**
the mobile lighting element (500) comprises LED lamps and preferably comprises means for energy storage, in particular a rechargeable accumulator.

3. Mobile workstation according to either of the preceding claims 1 or 2,
**characterized in that**
the mobile lighting element (500) comprises fastening means in order to be detachably fastened to the mobile workstation (1),
the fastening means preferably being formed by magnets for flexible fastening,
and particularly preferably at least part of the fastening means being arranged inside the lamp housing (501) or being formed integrally with the lamp housing (501).

4. Mobile workstation according to any of the preceding claims 1 to 3,
**characterized in that**
the light emission (L) of the mobile lighting element (500) is adjustable, in particular the brightness and/or the color temperature being alterable;
and/or
**in that** the mobile lighting element (500) comprises control buttons for adjusting the light emission (L) and/or for switching the mobile lighting element (500) on and off.

5. Mobile workstation according to any of the preceding claims 1 to 3,
**characterized in that**
the mobile lighting element (500) comprises at least one sensor unit for automatically adjusting the light emission (*L*), the sensor unit taking into account in particular data regarding ambient brightness, time, position and/or orientation of the mobile lighting element (500) when adjusting the light emission (*L*).

6. Mobile workstation according to any of the preceding claims,
**characterized in that**
the first and the second housing part (110, 120) are coupled to one another via a connecting element (150) such that, in the unfolded state, the first housing part (110) and the second housing part (120) are arranged at an angle of 90° to one another, at least in a first approximation.

7. Mobile workstation according to any of the preceding claims,
**characterized in that**
the first housing part (110) comprises a spatially extending cover element (112) of the housing (100), an end element (113) and two first side elements (111), the end element (113) and the two first side elements (111) being connected to the base element (112) and each being arranged perpendicular to the base element,
the two first side elements (111) being arranged parallel to one another on two opposite sides of the base element (112), and the end element (113) being arranged connecting the two first side elements (111),
and/or the second housing part (120) comprises a spatially extending bottom element (122) of the housing (100), a rear end element (123) and two second side elements (121),
the two second side elements (121) being arranged parallel to one another on two opposite sides of the bottom element (122), and the rear end element (123) being arranged connecting the two first side elements (111),
the end element (113) and the rear end element (123) forming two opposite sides of the housing (100) in the closed state of the housing (100).

8. Mobile workstation according to claim 7,
**characterized in that**
the worktop (300) is coupled to the second housing part (120), preferably by means of a coupling element (190),
the worktop (300) preferably being arranged at an angle to the bottom element (122), and the worktop (300) i preferably being arranged so as to be extendable relative to the second housing part (120),
and further preferably the worktop (300) being arranged such that it can be folded up relative to the second housing part (120),
a storage space (180) preferably being formed between the worktop (300) and the bottom element (122).

9. Mobile workstation according to either of the preceding claims 7 or 8,
**characterized in that**
the housing (100) is reversibly lockable by means of a locking arrangement (161, 162, 140);
and/or
**in that** the worktop (300) can be reversibly connected to the bottom element (122) by means of a further locking arrangement (171, 172, 140);
and/or
**in that** the worktop (300) comprises a limiting element (320) on the side facing the rear end element (123) of the housing (100), which limiting element protrudes at an angle from the plane of the worktop (300), the limiting element (320) preferably comprising at least one cable guide element (330).

10. Mobile workstation according to any of the preceding claims,
**characterized in that**
the worktop (300) comprises securing elements (310, 310a) which are designed to fix a mobile device (400) arranged on the worktop (300) in place.

11. Mobile workstation according to any of the preceding claims,
**characterized in that**
the mobile workstation (1) comprises a cable (200) for providing power and data signals, which cable is preferably coupled to a terminal block (210) arranged inside the housing (100),
the terminal block (210) preferably having at least one power connection (211, 212), in particular an AC connection (211) and/or a DC connection (212), and/or at least one data connection (212).

12. Mobile workstation according to any of the preceding claims,
**characterized in that**
the housing (100) comprises a handle element (130, 130A, 130B, 130C), which is formed in particular as a handle opening (130A), suitcase handle (130B) or strap (130C);
and/or
**in that** the housing (100) and/or one of the light emission means (500) comprises a camera.

13. System for mobile working,
comprising a mobile workstation (1) according to any of the preceding claims, and a mobile device (400).

## Revendications

1. Poste de travail mobile (1) formé par un boîtier (100) rabattable,
dans lequel le boîtier (100) présente une première partie de boîtier (110) et une seconde partie de boîtier (120), dans lequel la première et la seconde partie de boîtier (110, 120) sont disposées l'une en face de l'autre lorsque le boîtier est à l'état fermé,
dans lequel le poste de travail mobile (1) présente un plan de travail (300) permettant de positionner un appareil mobile (400), dans lequel le plan de travail (300) est disposé à l'intérieur du boîtier (100) et est accouplé au boîtier (100),
dans lequel le poste de travail mobile (1) présente au moins un moyen d'émission de lumière (500) permettant d'émettre une lumière (L) facilitant le travail d'un utilisateur, dans lequel l'au moins un moyen d'émission de lumière (500) est accouplé à la première partie de boîtier (110),
et dans lequel l'au moins un moyen d'émission de lumière (500) est un élément lumineux mobile (500),
dans lequel l'élément lumineux mobile (500) présente un boîtier de luminaire (501) comportant une surface d'émission de lumière (510) et est conçu pour l'émission de lumière (L) par l'intermédiaire de la surface d'émission de lumière (510), dans lequel l'élément lumineux mobile (500) peut être fixé de manière réversible dans différentes positions et/ou orientations sur une surface intérieure de la première partie de boîtier (110) du poste de travail mobile (1),
et dans lequel, selon la position et/ou l'orientation de l'au moins un élément lumineux mobile (500), différents types d'émission de lumière - par exemple un éclairage direct de l'utilisateur ou du plan de travail, ou un éclairage indirect de l'utilisateur ou du plan de travail, ou un rétroéclairage de l'appareil mobile (400) - sont réalisés par le poste de travail mobile (1).

2. Poste de travail mobile selon la revendication 1,
**caractérisé en ce**
**que** l'élément lumineux mobile (500) présente des moyens d'éclairage LED, et présente de préférence des moyens permettant le stockage d'énergie, en particulier un accumulateur rechargeable.

3. Poste de travail mobile selon l'une des revendications 1 ou 2,
**caractérisé en ce**
**que** l'élément lumineux mobile (500) présente des moyens de fixation permettant la fixation amovible sur le poste de travail mobile (1),
dans lequel, de préférence, les moyens de fixation permettant la fixation flexible sont formés par des aimants,
et dans lequel, de manière particulièrement préférée, au moins une partie des moyens de fixation est disposée à l'intérieur du boîtier de luminaire (501), ou est conçue d'un seul tenant avec le boîtier de luminaire (501).

4. Poste de travail mobile selon l'une des revendications 1 à 3,
**caractérisé en ce**
**que** l'émission de lumière (L) de l'élément lumineux mobile (500) est réglable, dans lequel la luminosité et/ou la température de couleur sont en particulier modifiables ;
et/ou
**en ce que** l'élément lumineux mobile (500) présente des touches de commande permettant d'ajuster l'émission de lumière (L) et/ou permettant d'allumer et d'éteindre l'élément lumineux mobile (500).

5. Poste de travail mobile selon l'une des revendications 1 à 3,
**caractérisé en ce**
**que** l'élément lumineux mobile (500) présente au moins une unité de détection permettant d'ajuster automatiquement l'émission de lumière (*L*), dans lequel l'unité de détection tient compte, lors de l'ajustement de l'émission de lumière (*L*), en particulier de données concernant la luminosité ambiante, l'heure, la position et/ou l'orientation de l'élément lumineux mobile (500).

6. Poste de travail mobile selon l'une des revendications précédentes,
**caractérisé en ce**
**que** la première et la seconde partie de boîtier (110, 120) sont accouplées l'une à l'autre par l'intermédiaire d'un élément de liaison (150), de telle sorte qu'à l'état rabattu, la première partie de boîtier (110) et la seconde partie de boîtier (120) sont disposées l'une par rapport à l'autre, au moins dans une première approximation, selon un angle de 90°.

7. Poste de travail mobile selon l'une des revendications précédentes,
**caractérisé en ce**
**que** la première partie de boîtier (110) présente un élément de couvercle (112) du boîtier (100), lequel élément de couvercle s'étend dans l'espace, un élément frontal (113) et deux premiers éléments latéraux (111), dans lequel l'élément frontal (113) ainsi que les deux premiers éléments latéraux (111) sont reliés à l'élément de base (112) et sont disposés respectivement perpendiculairement à l'élément de base,
dans lequel les deux premiers éléments latéraux (111) sont disposés parallèlement l'un à l'autre sur deux côtés opposés de l'élément de base (112), et l'élément frontal (113) est disposé de manière à relier les deux premiers éléments latéraux (111),
et/ou la seconde partie de boîtier (120) présente un élément de fond (122) du boîtier (100), lequel élément de fond s'étend dans l'espace, un élément frontal arrière (123) et deux seconds éléments latéraux (121),
dans lequel les deux seconds éléments latéraux (121) sont disposés parallèlement l'un à l'autre sur deux côtés opposés de l'élément de fond (122), et l'élément frontal arrière (123) est disposé de manière à relier les deux premiers éléments latéraux (111),
dans lequel, à l'état fermé du boîtier (100), l'élément frontal (113) et l'élément frontal arrière (123) forment deux côtés opposés du boîtier (100).

8. Poste de travail mobile selon la revendication 7,
**caractérisé en ce**
**que le** plan de travail (300) est accouplé à la seconde partie de boîtier (120), de préférence à l'aide d'un élément d'accouplement (190),
dans lequel, de préférence, le plan de travail (300) est disposé de manière inclinée par rapport à l'élément de fond (122), et le plan de travail (300) est disposé de préférence de manière à pouvoir être déployé par rapport à la seconde partie de boîtier (120),
et dans lequel, en outre de préférence, le plan de travail (300) est disposé de manière à pouvoir être relevé par rapport à la seconde partie de boîtier (120),
dans lequel un espace de rangement (180) est en outre de préférence formé entre le plan de travail (300) et l'élément de fond (122).

9. Poste de travail mobile selon l'une des revendications 7 ou 8,
**caractérisé en ce**
**que** le boîtier (100) peut être fermé de manière réversible à l'aide d'un agencement de fermeture (161, 162, 140) ;
et/ou
**en ce que** le plan de travail (300) peut être relié de manière réversible à l'élément de fond (122) à l'aide d'un autre agencement de fermeture (171, 172, 140) ;
et/ou
**en ce que** le plan de travail (300) présente, sur le côté tourné vers l'élément frontal (123) arrière du boîtier (100), un élément de délimitation (320) qui fait saillie en formant un angle par rapport au plan du plan de travail (300), dans lequel l'élément de délimitation (320) présente de préférence au moins un élément de guidage de câble (330).

10. Poste de travail mobile selon l'une des revendications précédentes,
**caractérisé en ce**
**que** le plan de travail (300) présente des éléments de sécurité (310, 310a) qui sont conçus pour fixer un appareil mobile (400) disposé sur le plan de travail (300).

11. Poste de travail mobile selon l'une des revendications précédentes,
**caractérisé en ce**
**que** le poste de travail mobile (1) présente une ligne de câble (200) pour la fourniture de signaux de courant et de données, laquelle ligne de câble est accouplée de préférence à une barrette de raccordement (210) disposée à l'intérieur du boîtier (100),
dans lequel, de préférence, la barrette de raccordement (210) présente au moins un raccordement électrique (211, 212), en particulier un raccordement en courant alternatif (211) et/ou un raccordement en courant continu (212), et/ou au moins un port de données (212).

12. Poste de travail mobile selon l'une des revendications précédentes,
**caractérisé en ce**
**que** le boîtier (100) présente un élément de poignée (130, 130A, 130B, 130C), qui est formé en particulier comme ouverture de poignée (130A), poignée de valise (130B) ou lanière (130C) ;
et/ou
**en ce que** le boîtier (100) et/ou l'un des moyens d'émission de lumière (500) présente une caméra.

13. Système pour le travail mobile,
présentant un poste de travail mobile (1) selon l'une des revendications précédentes, ainsi qu'un appareil mobile (400).
